(19) Europäisches Patentamt
European Patent Office
Office européen des brevets

(11) **EP 4 629 181 A1**

(12) **EUROPEAN PATENT APPLICATION**
published in accordance with Art. 153(4) EPC

(43) Date of publication:
08.10.2025 Bulletin 2025/41

(51) International Patent Classification (IPC):
*G06T 19/20* (2011.01)    *G06T 7/11* (2017.01)
*A61C 7/00* (2006.01)

(21) Application number: 23896900.0

(22) Date of filing: 30.11.2023

(86) International application number:
PCT/CN2023/135600

(87) International publication number:
WO 2024/114758 (06.06.2024 Gazette 2024/23)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
KH MA MD TN

(30) Priority: 02.12.2022 CN 202211543154

(71) Applicant: Guangzhou Heygears IMC. Inc
Guangzhou, Guangdong 510663 (CN)

(72) Inventors:
• ZHOU, Jinhai
  Guangzhou, Guangdong 510663 (CN)
• WANG, Yong
  Guangzhou, Guangdong 510663 (CN)
• ZHOU, Dachao
  Guangzhou, Guangdong 510663 (CN)

(74) Representative: Herzog IP Patentanwalts GmbH
Steinstraße 16-18
40212 Düsseldorf (DE)

(54) **THREE-DIMENSIONAL TOOTH MODEL SEGMENTATION METHOD AND APPARATUS**

(57) The disclosure relates to a method and apparatus for cutting a three-dimensional tooth model. The method includes: obtaining a two-dimensional projection image of a three-dimensional tooth model, and recognizing the two-dimensional projection image to obtain a plurality of tooth regions, where the tooth regions correspond one to one to teeth; determining original seed points corresponding to the plurality of tooth regions in the three-dimensional tooth model; expanding the original seed points within a preset range to obtain target seed points of the teeth in the three-dimensional tooth model; and cutting the three-dimensional tooth model based on the target seed points of the teeth to obtain cut teeth. The present disclosure solves the technical problem of low tooth-cutting accuracy on the three-dimensional tooth model.

Fig. 2

A two-Dimensional projection image of a three-dimensional tooth model is obtained, the two-dimensional projection image is recognized to obtain a plurality of tooth regions, wherein the tooth regions correspond one to one to teeth — S202

Original seed points corresponding to the plurality of tooth regions are determined in the three-dimensional tooth model — S204

The original seed points are expanded within a preset range to obtain target seed points of teeth in the three-dimensional tooth model — S206

The three-dimensional tooth model is cut based on the target seed points of the teeth to obtain cut teeth — S208

## Description

The disclosure claims the priority to Chinese Patent Application No. 202211543154.6, filed with the Chinese Patent Office on December 2, 2022 and entitled "Method and apparatus for cutting three-dimensional tooth model", which is incorporated in its entirety herein by reference.

## Technical Field

The disclosure relates to the technical field of orthodontics, and in particular to a method and apparatus for cutting a three-dimensional tooth model.

## Background

With the development of scientific and technical information, the manufacturing technology, the digital modeling technology, the material science, the numerical control technology, etc. have been rapidly developing and advancing as well as integrating with each other, and the computer technology has increasingly penetrated various aspects of teaching, scientific research and clinical applications in various fields of medical science with effective cooperation. With the development and popularization of the measurement technology, digitized tooth models become easily accessible. They are of critical importance to clinical diagnosis and treatment of dentistry. The emergence and development of the 3D printing technology has become one hot topic nowadays, and the application of the 3D printing technology in the medical field has become commonplace. 3D printing has been used in the medical field for more than twenty years, and has been widely used in oral implants, orthopedics, neurosurgery, and other surgeries.

As discovered by the inventors, in a current application scenario of orthodontic treatment, results need to be presented to a user quickly to boost confidence in the treatment, that is, simulation of a tooth target position is needed. In a case of the simulation of the tooth target position, after the scanning data of a patient are input, the effect after "correction" can be obtained and displayed through simple operation and automatic operation of a system, and a continuous "animation" changing from an original state to a target state can be demonstrated. In this way, communication between dentists and patients is clear, and a transaction is facilitated. As a front link of orthodontics, the simulation of the target position takes major responsibility for assisting doctor-patient communication. Output results of the simulation of the target position are also exported production content in subsequent links, and tooth cutting is an important link.

Currently, the three-dimensional tooth model cutting technology is still in a nascent stage in the related art, and can hardly satisfy the demand for efficient processing.

## Summary

The present disclosure provides a method and apparatus for cutting a three-dimensional tooth model, so as to solve the technical problem of low tooth-cutting accuracy of the three-dimensional tooth model.

According to an aspect of examples of the present disclosure, the present disclosure provides a method. The method includes: obtaining a two-dimensional projection image of a three-dimensional tooth model, and recognizing the two-dimensional projection image to obtain a plurality of tooth regions, where the tooth regions correspond one to one to teeth; determining original seed points corresponding to the plurality of tooth regions in the three-dimensional tooth model; expanding the original seed points within a preset range to obtain target seed points of the teeth in the three-dimensional tooth model; and cutting the three-dimensional tooth model based on the target seed points of the teeth to obtain cut teeth.

According to another aspect of the examples of the present disclosure, a method for manufacturing a dental device is further provided. The method includes:

obtaining cut teeth through the method according to any one of the above items; and

printing a formed tooth model based on the target cut teeth, where the formed tooth model is configured to obtain the dental device.

According to yet another aspect of the examples of the present disclosure, an apparatus for cutting a three-dimensional tooth model is further provided. The apparatus includes:
a memory and a processor, where the memory stores a computer program, and the computer program executes the method according to any one of the above items when run by the processor.

According to still another aspect of the examples of the present disclosure, a computer-readable storage medium is further provided. The computer-readable storage medium stores a computer program, where the computer program is configured to execute the above method according to any one of the above items when run by a processor.

In the present disclosure, after the three-dimensional tooth model is obtained, the original seed points on the three-dimensional tooth model are determined by recognizing the two-dimensional projection image of the three-dimensional tooth model, and the original seed points are expanded to obtain the target seed points, such that ranges of the teeth on the three-dimensional tooth model are marked by means of the target seed points. Further, the three-dimensional tooth model can be cut according to the target seed points, and the cut teeth are obtained, such that an effect of accurately cutting teeth of the three-dimensional tooth model is achieved. The problem of low tooth-cutting accuracy on a three-dimensional tooth model in the prior art is solved. Compared with traditional tooth cutting methods, the present disclosure can also avoid cutting tooth missing positions.

**Brief Description of the Drawings**

The accompanying drawings herein are incorporated in the description as a constituent part of the description, illustrate examples conforming to the present disclosure, and serve to explain the principles of the present disclosure along with the description.

In order to describe the technical solutions in examples of the present disclosure or the related art more clearly, the accompanying drawings required for describing the examples or the related art will be briefly described below. Apparently, those of ordinary skill in the art can also derive other accompanying drawings from these accompanying drawings without creative efforts.

Fig. 1 is a schematic diagram of an optional hardware environment of a method for cutting a three-dimensional tooth model according to an example of the present disclosure;

Fig. 2 is a flowchart of a method for cutting a three-dimensional tooth model according to an example of the present disclosure;

Fig. 3 is a two-dimensional projection image of a method for cutting a three-dimensional tooth model according to an example of the present disclosure;

Fig. 4 is a preliminary cutting region diagram of a method for cutting a three-dimensional tooth model according to an example of the present disclosure;

Fig. 5 is another preliminary cutting region diagram of a method for cutting a three-dimensional tooth model according to an example of the present disclosure;

Fig. 6 is a partial view of a three-dimensional tooth model corresponding to a preliminary cutting region according to an example of the present disclosure;

Fig. 7 is a schematic diagram of a flow network composed of seed points of a three-dimensional tooth model according to an example of the disclosure;

Fig. 8 is a schematic diagram of a preliminary cutting region cut through a minimum flow algorithm according to an example of the disclosure;

Fig. 9 is a triangular patch diagram of a method for cutting a three-dimensional tooth model according to an example of the present disclosure;

Fig. 10 is a smooth boundary diagram of a method for cutting a three-dimensional tooth model according to an example of the present disclosure;

Fig. 11 is a tooth order diagram of a method for cutting a three-dimensional tooth model according to an example of the present disclosure;

Fig. 12 is a flowchart of a method for cutting a three-dimensional tooth model according to an example of the present disclosure;

Fig. 13 is a schematic diagram of peak points and valley points of a three-dimensional tooth model according to an example of the present disclosure;

Fig. 14 is a schematic diagram of cutting teeth on a three-dimensional tooth model according to an example of the present disclosure;

Fig. 15 is a flowchart of a three-dimensional tooth model according to an example of the present disclosure;

Fig. 16 is a schematic diagram of a peak point combination of a three-dimensional tooth model according to an example of the present disclosure;

Fig. 17 is a cutting curve graph of a three-dimensional tooth model according to an example of the present disclosure; and

Fig. 18 is a block diagram of an apparatus for cutting a three-dimensional tooth model according to an example of the present disclosure.

**Detailed Description of the Embodiments**

In order to make the objectives, technical solutions, and advantages in examples of the present disclosure clearer, the technical solutions in the examples of the present disclosure are clearly and completely described below with reference to the accompanying drawings in the examples of the present disclosure. Apparently, the examples described are some examples rather than all examples of the present disclosure. Based on the examples of the present disclosure, all other examples derived by those of ordinary skill in the art without creative efforts fall within the scope of protection of the present disclosure.

In the following description, suffixes such as "module", "component" or "unit" used to denote elements are used only to facilitate the description of the present disclosure and have no particular meaning in themselves. Thus, "module" and "component" can be used interchangeably.

For the sake of description, some nouns or terms involved in the examples of the present disclosure are described below:

Flow network: a special class of complex weighted directed networks. A directed connecting edge indicates a direction of energy, matter, money, information, attention, etc., and a weight of the connecting edge indicates a rate of flow. The flow network in the present disclosure is a graph composed of edges and points. There is a point with an in-degree of 0, referred to as a source point. There is a point with an out-degree of 0, referred to as a terminal point.

Source point: a point emitting a flow, having infinite flows, and generally denoted by s. The source point has an in-degree of 0 and an out-degree greater than 0.

Terminal point: a point receiving a flow, and generally denoted by t. The terminal point has an out-degree of 0 and an in-degree greater than 0.

Network-flow: a collection of all edge flows in a flow network.

Minimum cut algorithm: one of classic algorithms for image cut, also referred to as graph cut, and configured to divide a graph into two parts such that a sum of edge weights between the two parts is minimized.

Maximum-flow minimum-cut: in a directed graph, a maximum rate of flow that can reach a terminal point from a source point is equal to a sum of minimum volumes of a collection of edges that would break a network flow in a case that the edges are removed on the way.

In any network, a value of the maximum flow is equal to a capacity of the minimum cut.

In order to solve the problems mentioned in the background art, according to an aspect of the examples of the present disclosure, an example of a method for cutting a three-dimensional tooth model is provided.

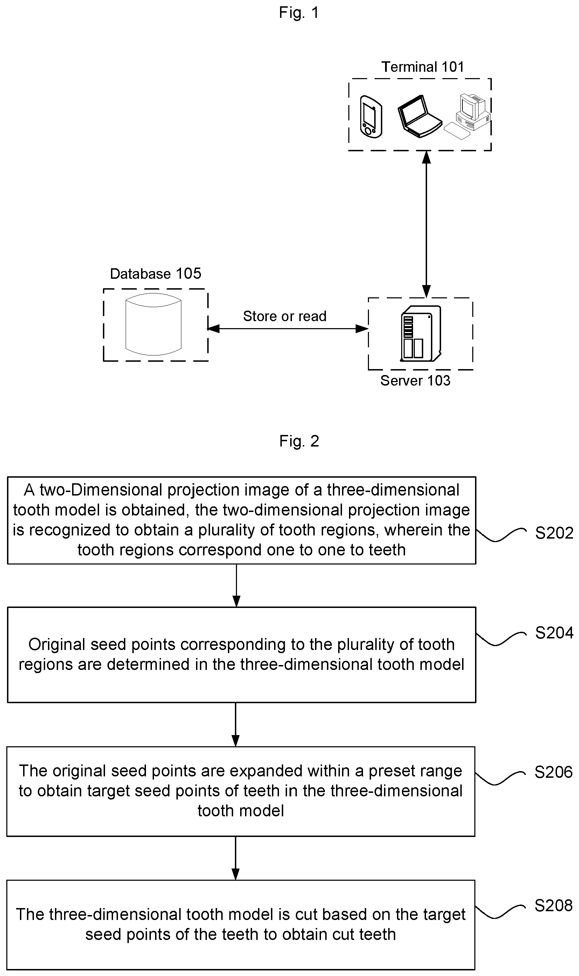

Optionally, in the example of the present disclosure, the method may be applied to a hardware environment composed of a terminal 101 and a server 103 as shown in Fig. 1. As shown in Fig. 1, the server 103 is connected to the terminal 101 through a network, and may be configured to provide services for the terminal or a client installed on the terminal. A database 105 may be set on the server or may be independent of the server, and may be configured to provide data storage services for the server 103. The network includes, but is not limited to, a wide area network, a metropolitan area network, or a local area network. The terminal 101 may be an apparatus for obtaining a three-dimensional tooth model, such as a scanner for an oral scanning model, or may be a terminal for receiving a three-dimensional tooth model, such as a mobile phone and a computer.

The method for cutting a three-dimensional tooth model in the example of the present disclosure may be executed by the server 103, or may be executed jointly by the server 103 and the terminal 101. As shown in Fig. 2, the method for cutting a three-dimensional tooth model may include:

S202, a two-dimensional projection image of the three-dimensional tooth model is obtained, the two-dimensional projection image is recognized, and a plurality of tooth regions are obtained, where the tooth regions correspond one to one to teeth.

S204, original seed points corresponding to the plurality of tooth regions are determined in the three-dimensional tooth model.

S206, the original seed points are expanded within a preset range to obtain target seed points of teeth in the three-dimensional tooth model.

S208, the three-dimensional tooth model is cut based on the target seed points of the teeth, and the cut teeth are obtained.

A purpose of the method for cutting a three-dimensional tooth model is to accurately cut all teeth of the three-dimensional tooth model into independent tooth. The tooth regions may correspond one to one to the teeth. Certainly, one tooth region may alternatively correspond to a plurality of teeth.

The three-dimensional tooth model described above may be an oral scanning model. The oral scanning model refers to a three-dimensional model including a tooth portion of a user and generated by scanning an interior of an oral cavity of the user. Data of the three-dimensional tooth model are stored on a computer or a server, a shape or style of the three-dimensional tooth model may be displayed on a display screen for the convenience of a dentist.

The two-dimensional projection image may be an image obtained by projecting the three-dimensional tooth model onto a plane. The two-dimensional projection image contains a teeth region and a non-tooth region. By recognizing the two-dimensional projection image, a plurality of tooth regions can be recognized for cutting the teeth on the three-dimensional tooth model. A recognition method may relate to recognizing the two-dimensional projection image in a manner of machine vision or artificial intelligence to obtain the tooth regions.

A surface of the three-dimensional tooth model is composed of polygon patches, such as triangular patches. One triangular patch includes three vertexes. Vertexes of all triangular patches may be regarded as seed points. The original seed points described above are seed points, corresponding to the tooth regions of the two-dimensional projection image, of all seed points of the three-dimensional tooth model. That is to say, through the original seed points, the tooth regions may be initially determined on the three-dimensional tooth model.

Since the tooth regions determined by the original seed points may be inaccurate, the original seed points may be expanded to obtain the target seed points. Regions covered by the target seed points may be regarded as the teeth on the three-dimensional tooth model. Through the target seed points, the teeth of the three-dimensional tooth model can be cut accurately.

After the tooth regions are recognized, it can be understood that positions and regions of the teeth are determined on the two-dimensional projection image. Then, the positions and regions of the teeth are mapped to the three-dimensional tooth model to determine the original seed points on the three-dimensional tooth model. Since the seed points are the vertexes of the triangular patches on the surface of the three-dimensional tooth model, the original seed points may be understood as regions covering the teeth on the three-dimensional tooth model. In order to guarantee accuracy, the original seed points are further expanded to obtain the target seed points. The three-dimensional tooth model is cut according to the target seed points to obtain the cut teeth. Accordingly, the teeth in the three-dimensional tooth model can be cut into individual teeth.

According to the above method, the original seed points on the three-dimensional tooth model are determined by recognizing the two-dimensional projection image of the three-dimensional tooth model, and the original seed points are expanded to obtain the target seed points, such that regions of the teeth on the three-dimensional tooth model are marked by means of the target seed points. Further, the three-dimensional tooth model can be cut according to the target seed points, and the cut teeth are obtained, such that an effect of accurately cutting teeth on the three-dimensional tooth model is achieved.

In some examples, the original seed points are expanded within a preset range to obtain the target seed points of the teeth in the three-dimensional tooth model. For example, tooth edges are determined according to the original seed points. The tooth edges are edges of a surface of the three-dimensional tooth model covering all of the original seed points of the tooth regions. Non-target seed points corresponding to regions other than the plurality of tooth regions are determined in the three-dimensional tooth model, and gum edges are determined according to the non-target seed points. The gum edges are edges of the surface of the three-dimensional tooth model covering all of the non-target seed points. On the surface of the three-dimensional tooth model, any one point on a side of each tooth edge away from the gum edge is determined as a source point, and any one point on a side of the gum edge away from the tooth edge is determined as a terminal point. A plurality of flow networks are constructed according to the source points and the terminal points, such that seed points between the source points and the terminal points are nodes of the flow networks. Any two adjacent nodes are connected. The seed points are vertexes of triangular patches. The flow networks are cut through a minimum cut algorithm, and the nodes connected to the source points in the cut flow networks are determined as the target seed points of the corresponding teeth.

The tooth edges are determined according to the original seed points. One tooth region corresponds to one tooth edge. The gum edge is determined according to the non-target seed points. Only one gum edge is provided. Whether a middle portion between the tooth edges and the gum edge is a tooth or a gum is not clear. The flow networks composed of the seed points are cut through the minimum cut algorithm. The nodes connected to the source points in the cut flow networks are the seed points of the teeth. Nodes connected to the terminal points in the cut flow networks are seed points of the gum. The teeth and the gum can be accurately cut out.

In some examples, the non-target seed points corresponding to regions other than the plurality of tooth regions are determined in the three-dimensional tooth model, and the gum edges are determined according to the non-target seed points. For example, the teeth on the three-dimensional tooth model are cut according to the plurality of tooth regions preliminarily, and a plurality of preliminary cutting regions are obtained. The preliminary cutting regions correspondingly cover the tooth regions one to one. Groups of non-target seed points corresponding to the regions other than the tooth regions are determined in the preliminary cutting regions. The gum edges corresponding to the groups of non-target seed points are determined. Each gum edge is an edge of the surface of the three-dimensional tooth model covering one group of non-target seed points. The gum edges correspond one to one to the teeth.

Certainly, a plurality of gum edges may also be provided. The plurality of preliminary cutting regions may be obtained by preliminarily cutting the teeth on the tooth regions. The preliminary cutting regions include both the tooth regions and the non-tooth regions. The gum edges are edges determined by the non-target seed points of the non-tooth regions. The gum edges correspond one to one to the tooth regions. In this way, a size of a middle portion between the tooth edges and the gum edges can be reduced, and a cut effect is better.

In some examples, the flow networks are cut through the minimum cut algorithm, and the nodes connected to the source points in the cut flow networks are determined as the target seed points. For example, geometric features of a triangular patch corresponding to two adjacent nodes are obtained. The geometric features include one or more of a side length of a target edge, an angle between a normal line corresponding to two adjacent nodes and the target edge, an average curvature between the two adjacent nodes, and a distance between the target edge and a third vertex of the triangular patch. The target edge is an edge on which the two adjacent nodes are located in the triangular patch. A weighted average value of each geometric feature is calculated, and a capacity of each target edge is obtained. The flow networks are cut according to the capacities of the target edges through the minimum cut algorithm, and the nodes connected to the source points in the cut flow networks are determined as the target seed points.

Since the flow networks are cut according to the capacities of the edges, when the minimum cut algorithm is applied to cutting of the teeth and the gum, the geometric features corresponding to the edges are weighted and averaged. Weighted average values are obtained as the capacities of the edges. Thus cutting of the teeth and the gum may be implemented through the minimum cut algorithm.

In some examples, after the original seed points are obtained, the original seed points may be expanded to obtain the target seed points. A process of expanding the original seed points may be divided into one or more stages.

For example, in a stage, the original seed points may be expanded according to the preset curvature threshold, and the target seed points may be obtained. The preset curvature threshold may be understood as a constraint condition used when the original seed points are expanded, so as to prevent the original seed points from expanding beyond a limit. The preset curvature threshold may include one or more curvature values. In a case that the preset curvature threshold includes one curvature value, the original seed points may be expanded according to the curvature value, and the target seed points are obtained. In a case that the preset curvature threshold includes a plurality of curvature values, the original seed points may be expanded by using a first curvature value, then an expanded result of the first curvature value may be expanded by using a second curvature value, and an expanded result of the second curvature value may be expanded by using a third curvature value until all the curvature values are used once.

In some examples, the original seed points are expanded according to the preset curvature threshold, and the target seed points are obtained. For example, the original seed points are expanded according to initial curvature threshold, and first seed points are obtained. The first seed points are expanded according to a target curvature threshold, and the target seed points are obtained. The target curvature threshold is determined according to the initial curvature threshold.

With the preset curvature threshold composed of the initial curvature threshold and the target curvature threshold as an instance, the initial curvature threshold is firstly used to expand the original seed points to obtain the first seed points, and then the target curvature threshold is used to expand the first seed points to obtain the target seed points. The initial curvature threshold and the target curvature threshold may be the same or not. The target seed points are obtained through expanding twice in sequence.

In some examples, the original seed points are expanded according to the initial curvature threshold, and the first seed points are obtained. For example, seed points adjacent to the original seed points are determined as current seed points. In a case that curvatures of the current seed points are less than or equal to the initial curvature threshold, the current seed points and the original seed points are determined as the first seed points.

In the example, when the original seed points are expanded by using the initial curvature threshold, the curvatures of the seed points adjacent to the original seed points may be obtained. The curvature is a rate of rotation of a tangent angle to an arc length for a point on a curve, is defined by a differential, and indicates how far the curve deviates from a straight line. The curvature indicates a numerical value of a degree of curving of a curve at a point. Each seed point corresponds to one curvature. By comparing the curvature with the initial curvature threshold, it is determined that whether the seed points adjacent to the original seed points can be used as the first seed points. The original seed points may be used as the first seed points without curvature comparison.

The adjacent to mentioned herein and below may be understood as two vertexes that form a same edge of a same triangular patch with a seed point. For example, adjacent to the original seed point refers to two vertexes that form a same edge of a same triangular patch as the original seed point.

In some examples, the first seed points are expanded according to the target curvature threshold, and the target seed points are obtained. For example, seed points adjacent to the first seed points are determined as current seed points. In a case that curvatures of the current seed points are less than or equal to the target curvature threshold, the first seed points and the current seed points are determined as the target seed points.

After the initial curvature threshold is used to expand the original seed points to obtain the first seed points, the target curvature threshold may be used to expand the first seed points to obtain the target seed points. The curvatures of the seed points adjacent to the first seed points are determined. Then the curvatures are compared with the target curvature threshold. Whether the seed points adjacent to the first seed points are the target seed points is determined by comparing a magnitude relation. Accordingly, it is completed that the original seed points are expanded by using the initial curvature threshold and the target curvature threshold to obtain the target seed points.

In some examples, before the first seed points are expanded according to the target curvature threshold, and the target seed points are obtained, the method further includes: a sum of the initial curvature threshold and a preset value is determined as the target curvature threshold, where the preset value is a positive number.

In the example, the initial curvature threshold and the target curvature threshold may be empirical values. Alternatively, the initial curvature threshold may be an empirical value, and the target curvature threshold may be determined according to the initial curvature threshold. For example, the sum of the initial curvature threshold and the preset value is used as the target curvature threshold. That is, the target curvature threshold is determined according to the initial curvature threshold, and the target curvature threshold is greater than the initial curvature threshold. The preset value is a value set in advance, and may be modified according to different three-dimensional tooth models.

In some examples, after the original seed points are expanded according to the initial curvature threshold, and first seed points are obtained, or the first seed points are expanded according to the target curvature threshold, and the target seed points are obtained, the method further includes: the first seed point is adjusted to be a non-first seed point in a case that a point on the two-dimensional projection image corresponding to the first seed point does not fall into the corresponding tooth region; or, the target seed point is adjusted to be a non-target seed point in a case that a point on the two-dimensional projection image corresponding to the target seed point does not fall into the corresponding tooth region.

In the example, when the original seed points are expanded according to the initial curvature threshold or the first seed points are expanded according to the target curvature threshold, whether the expanded seed points satisfy requirements also needs to be checked, that is, whether expansion is beyond a range, and whether seed points in the non-tooth regions are used as the first seed points or the seed points in the non-tooth regions are used as the target seed points. For example, when the original seed points are expanded according to the initial curvature threshold, in a case that the curvatures of the seed points adjacent to the original seed points are less than or equal to the initial curvature threshold, the regions where corresponding points of the seed points on the two-dimensional projection image are located also need to be determined. In a case that a seed point is not located in the tooth regions, it indicates that the seed point falls out of the tooth regions of the three-dimensional tooth model. Thus the seed point is regarded as a non-first seed point. When the first seed points are expanded according to the target curvature threshold, in a case that the curvatures of the seed points adjacent to the first seed points are less than or equal to the target curvature threshold, the regions where corresponding points of the seed points on the two-dimensional projection image are located also need to be determined. In a case that a seed point is not located in the tooth regions, it indicates that the seed point falls out of the tooth regions of the three-dimensional tooth model. Thus the seed point is regarded as a non-target seed point.

In some examples, after the original seed points are expanded according to the preset curvature threshold, and the target seed points are obtained, and before the three-dimensional tooth model is cut based on the target seed points of the teeth, and the cut teeth are obtained, the method further includes: target regions are obtained by expanding the plurality of tooth regions; and the target seed points are expanded according to the initial curvature threshold and a height in the target regions.

After the original seed points are expanded to obtain the target seed points, the teeth of the three-dimensional tooth model may be cut according to the target seed points. Moreover, the target seed points may be expanded again before the teeth are cut. That is to say, after the initial curvature threshold and the target curvature threshold are used to expand the original seed points in a first stage to obtain the target seed points, a second stage of expansion may also be performed.

In the second stage of expansion, the tooth regions on the two-dimensional projection image may be adjusted first, and the tooth regions may be expanded to obtain the target regions. Then, the target seed points are expanded in the second stage by using the initial curvature threshold and the height with the target regions as the constraint. An objective of enlarging the tooth regions to the target regions is to guarantee that all the seed points located on the teeth of the three-dimensional tooth model are marked as target seed points, omission is avoided.

In some examples, when the target seed points are expanded according to the initial curvature threshold and the height, seed points adjacent to the target seed points may be determined as current seed points. In a case that heights of the current seed points are greater than a preset standard height and curvatures of the current seed points are less than or equal to the target curvature threshold, the current seed points may be determined as the target seed points.

The heights may be a numerical value of the seed points in a preset direction of the three-dimensional tooth model. For example, the preset direction of the three-dimensional tooth model may be used as a Z axis, and a coordinate value of each seed point on the Z axis may be used as the height of the seed point.

The preset direction may be any direction. After the three-dimensional tooth model is obtained, an orientation of the three-dimensional tooth model may be adjusted to the preset direction, such that the directions of all the obtained three-dimensional tooth models may be unified.

When the target seed points are expanded by using the initial curvature threshold and the heights, the seed points adjacent to the target seed points may be used as the current seed points. In a case that the curvatures and height values of the current seed points both satisfy requirements of the initial curvature threshold and the height, the current seed points may be used as the target seed points, and expansion of the target seed point is completed.

In some examples, in the case that heights of the current seed points are greater than a preset standard height, and curvatures of the current seed points are less than or equal to the target curvature threshold, the current seed points are determined as the target seed points. For example, the current seed points are determined as the target seed points in cases that the heights of the current seed points are greater than a standard height, the curvatures of the current seed points are less than or equal to the target curvature threshold, and corresponding points of the current seed points on the two-dimensional projection image are located in the target regions. The target regions are regions obtained by expanding the plurality of tooth regions. In a case that the corresponding points of the current seed points on the two-dimensional projection image are located outside the target regions, the current seed points are determined as non-target seed points.

When the target seed points are expanded by using the initial curvature threshold and the heights, the target seed points need to be guaranteed not to expand beyond the target regions. The target regions are regions obtained by enlarging the tooth regions. An objective of enlarging the tooth regions is to include a portion of the non-tooth regions near the tooth regions in the target regions. In this way, the target seed points may be allowed to be expanded to the non-tooth regions near the tooth regions when the target seed points are expanded by using the initial curvature threshold and heights. Accordingly, the expanded target seed points may cover all the tooth regions.

In some examples, after the target seed points are expanded according to the initial curvature threshold and the height, the method further includes: seed points adjacent to the expanded target seed points are determined as current seed points; and the current seed points are further determined as the target seed points.

After the target seed points are expanded by using the initial curvature threshold and the heights, the expanded target seed points may be expanded again. The seed points adjacent to the target seed points are further determined as the target seed points. An objective of the expansion is also to make the expanded target seed points cover all the tooth regions, such that the teeth are intact when the teeth are cut according to the expanded target seed points.

In some examples, before the original seed points are expanded within the preset range, the method further includes: the plurality of tooth regions are expanded, and target regions are obtained; points other than the points of the target regions on the three-dimensional tooth model are marked as third seed points; and the third seed points are expanded according to a curvature threshold.

In the example, the target regions are obtained by expanding the tooth regions, such that the target regions include all the tooth regions and also include the non-tooth regions near the tooth regions. Accordingly, when the points other than the points of the target regions on the three-dimensional tooth model are marked as the third seed points, none of the third seed points are points on the teeth. By expanding the third seed points, a point of a non-tooth portion (a gum portion or a space between teeth) close to a tooth portion may be marked as the third seed point, such that a boundary between a portion outside the teeth and the tooth portion may be closer to the tooth portion. A range of the target regions may be reduced. The target regions include less non-tooth regions although the target regions include the non-tooth regions.

After the third seed points are expanded, a cutting line between the tooth portion and the portion outside the teeth on the three-dimensional tooth model becomes "thinner".

In some examples, the third seed points are expanded according to the curvature threshold. For example, seed points adjacent to the third seed points are determined as current seed points. In a case that curvatures of the current seed points are greater than the curvature threshold, the current seed points are determined as the third seed points.

In the example, when the third seed points are expanded, the third seed points may be expanded according to the curvature and the curvature threshold. The curvature of each third seed point may be calculated by differentiating a rate of rotation of a tangent angle of the points to an arc length. The curvature threshold may be a preset threshold. The curvature threshold may be different for different three-dimensional tooth models.

In some examples, after the seed points adjacent to the third seed points are determined as the current seed points, the method further includes: in a case that points corresponding to the current seed points on the two-dimensional projection image are located within the target regions, the current seed points are determined as non-third seed points.

After the third seed points are expanded, whether the third seed points are expanded into the target regions needs to be checked. Since the target regions contains the tooth regions, in a case that the third seed points are expanded into the target regions, the third seed points may be expanded into the tooth regions. Thus the third seed points located in the target regions need to be returned as the non-third seed points.

In some examples, after the third seed points are expanded according to the curvature threshold, the method further includes: a first region composed of the third seed points is determined; a sub-region is determined from the first region; and in a case that the sub-region is surrounded by the target seed points, seed points in the sub-region are determined as the target seed points.

In the example, after the third seed points are expanded, the third seed points constitute the first region. The first region may be divided into a plurality of sub-regions. Each sub-region of the plurality of sub-regions may be understood as a region composed of a plurality of third seed points. In a case that a sub-region is surrounded by the target seed points, it indicates that the sub-region is located in the tooth portion of the three-dimensional tooth model. The sub-region may not be a tooth but a hole of a tooth. Thus seed points of the sub-region are classified as the tooth portion as the target seed points.

In some examples, the two-dimensional projection image of the three-dimensional tooth model is obtained. For example, an orientation of the three-dimensional tooth model is adjusted from an initial orientation to a target orientation. The three-dimensional tooth model with the target orientation is projected onto a target surface, and the two-dimensional projection image is obtained.

In the example, when the three-dimensional tooth model is projected onto the two-dimensional projection image, the orientation of the three-dimensional tooth model may be adjusted first. The orientation may be adjusted to the target orientation. The target orientation may be a preset orientation. An objective of adjusting the orientation of the three-dimensional tooth model is to make the tooth regions on the two-dimensional projection image more complete and less shielded when the three-dimensional tooth model is projected onto the two-dimensional projection image. For example, a horizontal plane may be used as an X axis and a Y axis of three-dimensional coordinates, and an upward direction of the horizontal plane may be used as the target orientation. After the three-dimensional tooth model is obtained, a teeth direction of the three-dimensional tooth model may be the target orientation.

After the orientation of the three-dimensional tooth model is adjusted, the three-dimensional tooth model may be projected onto the target plane. The target plane may be a horizontal plane.

In some examples, the two-dimensional projection image is recognized, and the plurality of tooth regions are obtained. For example, the two-dimensional projection image is input into a recognition model. The plurality of tooth regions are marked on the two-dimensional projection image by the recognition model.

In the example, the two-dimensional projection image may be recognized by the recognition model, and then the tooth regions are recognized. After the two-dimensional projection image is input to the recognition model, the recognition model extracts and recognizes features, and outputs the plurality of tooth regions.

In some examples, the original seed points corresponding to the plurality of tooth regions are determined in the three-dimensional tooth model. For example, a vertex of each triangular surface in the three-dimensional tooth model is determined as a current vertex. In a case that a corresponding point of the current vertex on the two-dimensional projection image is located in the plurality of tooth regions, the current vertex is determined as one original seed point.

In the example, the surface of the three-dimensional tooth model is covered by the polygon patches. The polygon patches may be triangular patches. With the triangular patches as an instance, each triangular patch has three vertexes. Two adjacent triangular patches share an edge. In a case that a corresponding point of a vertex of each triangle patch in the two-dimensional projection image is located in the tooth regions, the vertex may be used as the original seed point.

In some examples, after the three-dimensional tooth model is cut based on the target seed points of the teeth, and the cut teeth are obtained, the method further includes: the cut teeth are arranged.

In some examples, the cut teeth are arranged. For example, an average value of tooth midpoints of all the teeth is determined as a start point, the tooth midpoint of each tooth is determined as an end point, and a vector for each tooth is formed. A straight line where two teeth having a largest distance between the middle points of the teeth are located is determined as a target straight line. All the teeth are arranged according to a magnitude of included angles between the vectors and the target straight line.

After the teeth in the example are cut, arranging may be performed. A line connecting the average value of the tooth midpoints and the midpoint of each tooth is used as a vector, and the teeth may be arranged by the included angles between the vectors and the target straight line formed by the two teeth having the largest distance. That is, the teeth may be arranged from a first tooth on one side to a last tooth on the other side.

In some examples, after the three-dimensional tooth model is cut based on the target seed points of the teeth, and the cut teeth are obtained, the method further includes: an edge of the teeth is smoothed, and a smoothed edge is obtained.

In some examples, the edge of the teeth is smoothed, and the smoothed edge is obtained. For example, vertexes on the edge of the teeth are arranged. A second vertex in the arranged vertexes is determined as a current vertex. The following operations are performed on the current vertex until the current vertex includes no rear vertex: a center point of a front vertex and a rear vertex of the current vertex is determined as a smooth point; and the rear vertex of the current vertex is determined as a new current vertex when one smooth point is obtained, and the obtained smooth point is determined as a front vertex of the new current vertex. A first vertex on the edge of the teeth is connected to the obtained smooth points in sequence, and the smoothed edge of the teeth is obtained.

In the example, an objective of smoothing the edge of the teeth is to reduce an edge angle of the cutting line between the teeth and the portion outside the teeth, so as to avoid discomfort of the gum of the user caused by a tooth model cut out later being too sharp after mounting.

During smoothing, a series of seed points form one curve from the seed points that the edge of the teeth passes through. Starting from the starting seed point, the starting seed point and the second seed point are averaged to obtain the first midpoint. The first midpoint and the third seed point are averaged to obtain the second midpoint. The second midpoint and the fourth seed point are averaged to obtain the third midpoint. The above steps are repeated until the last seed point on the edge of the teeth is calculated. All the midpoints are connected in sequence, and then the smoothed edge of the teeth is obtained.

The method for cutting a three-dimensional tooth model is described below in conjunction with an instance.

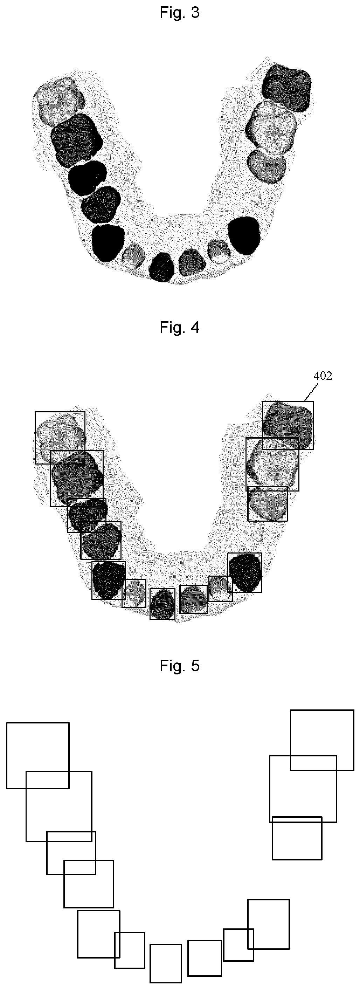

For example, as shown in Fig. 3, Fig. 3 is a two-dimensional projection image of an exemplary three-dimensional tooth model. A tooth portion and a gum portion in Fig. 3 are the three-dimensional tooth model obtained by oral scanning. When the three-dimensional tooth model is projected onto a plane, a two-dimensional projection image as shown in Fig. 3 is obtained.

After the three-dimensional tooth model of a user is obtained by obtaining oral scanning data of a user, a direction of the three-dimensional tooth model may be adjusted. An objective of adjusting the direction of the three-dimensional tooth model is to make the tooth portion of the three-dimensional tooth model appear on the two-dimensional projection image as much as possible when the two-dimensional projection image is obtained by projection.

When the direction is adjusted, the three-dimensional tooth model may be input, and the three-dimensional tooth model is aligned in a positive Z-axis direction. An alignment method may be any alignment method in the art, and is not limited herein. With the teeth of the three-dimensional tooth model placed upwards on a desktop as an example, the desktop may represent an X axis and a Y axis of a three-dimensional rectangular coordinate system, and a normal line of the desktop facing the teeth is a Z axis. After the three-dimensional tooth model is aligned in the direction, the teeth of the three-dimensional tooth model face upwards. Fig. 3 may be a top view of the three-dimensional tooth model, that is, the two-dimensional projection image obtained by projecting the three-dimensional tooth model onto the desktop.

After the three-dimensional tooth model is projected onto the plane to obtain the two-dimensional projection image, a recognition model may be used to recognize the two-dimensional projection image, such that tooth regions on the two-dimensional projection image may be recognized. After the tooth regions are recognized, boxes may be used for preliminary cutting to obtain preliminary cutting regions of separate teeth. The boxes may be minimal axial bounding boxes containing mask regions, or may be oblique boxes. Each preliminary cutting region may have a regular shape or an irregular shape. For example, block 402 in Fig. 4 refers to a preliminary cutting region covering the recognized tooth region. The preliminary cutting region includes a tooth region and a part of a non-tooth region. The blocks in Fig. 4 are instances only. For example, as shown in Fig. 5, Fig. 5 shows the preliminary cutting regions.

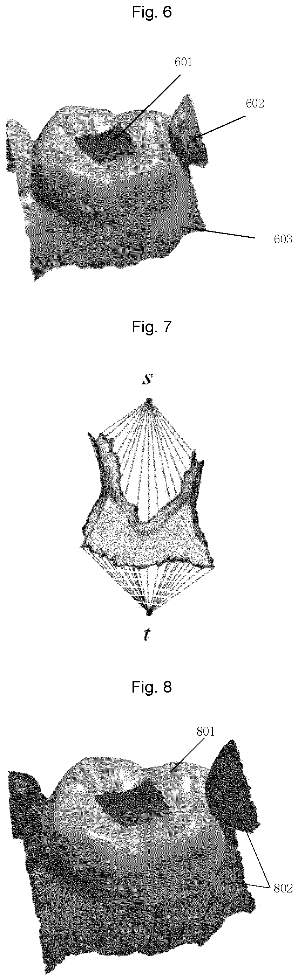

As shown in Fig. 6, a three-dimensional separate tooth model may be obtained by performing preliminary cutting on the three-dimensional tooth model by means of the preliminary cutting regions. In the figure, 601 is a three-dimensional model of a tooth, 602 is a partial three-dimensional model of an adjacent tooth, and 603 is a three-dimensional model of a gum near the tooth.

In a three-dimensional separate tooth model, a tooth edge is determined according to original seed points of 601. One tooth corresponds to one tooth edge. A gum edge is determined according to non-target seed points of 602 and 603. The gum edges also correspond one to one to the teeth. As shown in Fig. 7, whether a middle portion between the tooth edge and the gum edge is a tooth or a gum is not clear. A flow network composed of the seed points is cut through the minimum cut algorithm. A node connected to the source point s in the cut flow network is a seed point of the tooth. A node connected to the terminal point t in the cut flow network is a seed point of the gum. The tooth and the gum can be accurately cut out. The cut three-dimensional separate tooth model is shown in Fig. 8. In the figure, 801 denotes a tooth, and 802 denotes a portion other than the tooth.

Since the flow networks are cut according to the capacities of the edges, when the minimum cut algorithm is applied to cutting of the teeth and the gum, the geometric features corresponding to the edges are weighted and averaged.

Weighted average values are obtained as the capacities of the edges. Thus cutting of the teeth and the gum can be implemented through the minimum cut algorithm.

After the tooth region is recognized in the two-dimensional projection image, an actual tooth region in the three-dimensional model may be determined. The tooth region on the two-dimensional projection image corresponds to a portion of the three-dimensional tooth model, and may correspond to a tooth portion on the three-dimensional tooth model. All the points on the tooth portion are filtered, the points where a normal line direction intersects with the original model are removed, and the remaining points after filtering are used as original seed points.

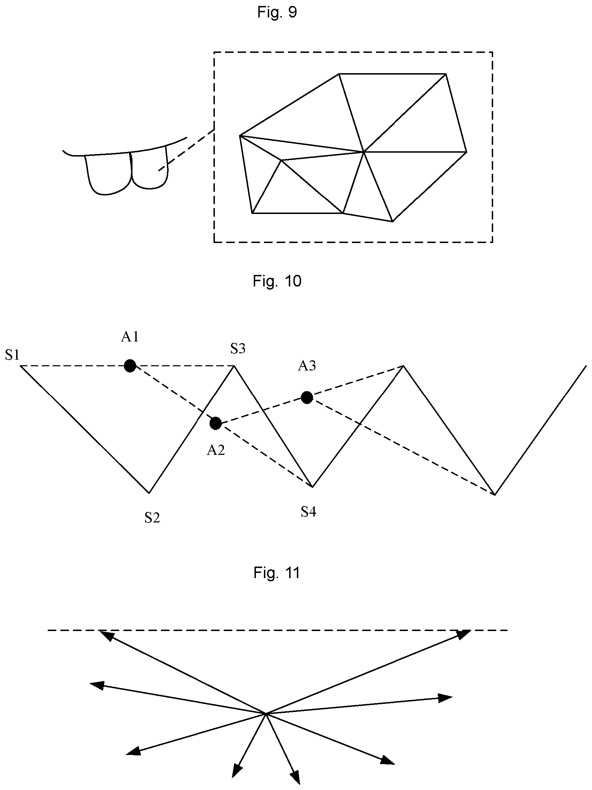

For example, as shown in Fig. 9, a surface (the tooth portion and the non-tooth portion, the surface of the entire model) of a three-dimensional tooth model (only two incisors are shown in Fig. 9) is composed of triangular patches (or composed of quadrilateral, pentagonal, ..., polygon patches). The triangular patches do not lie exactly on a same plane, and face each other at a plane angle. Vertexes of the triangular patches are seed points. Alternatively, after denoising the vertexes of the triangular patches, the remaining points are used as seed points. In a case that points on the two-dimensional projection image, which correspond to the seed points of the three-dimensional tooth model, are located in the tooth regions, such as shown in Fig. 4, the seed points are used as the original seed points.

In the example, the original seed points may be expanded to obtain target seed points. An objective of expanding the original seed points is to cover the tooth portion of the three-dimensional tooth model by the expansion since the original seed points may not contain all the tooth portions on the three-dimensional tooth model.

Expansion for the original seed points is divided into a plurality of stages.

In the first stage, each original seed point is expanded by means of a curvature. Extending the original seed point is actually to check whether a seed point located adjacent to the original seed point and capable of being used as a target seed point together with the original seed point is provided.

To determine whether the seed points are adjacent, it can be determined whether the seed points are located on a same straight line.

When the original seed point is expanded by means of the curvature, the original seed point may be expanded twice in sequence. The original seed point may be expanded by means of an initial curvature threshold and then expanded by means of a target curvature threshold. The target curvature threshold is a sum of the initial curvature threshold and a preset value. Thus for the seed point adjacent to the original seed points, it is first determined whether the curvature is less than the initial curvature threshold. In a case that the curvature is less than the initial curvature threshold, the seed point is used as a first seed point together with the original seed points. Then, a seed point adjacent to the first seed points is used as a target seed point together with the first seed point in a case that the curvature is less than or equal to the target curvature threshold. Thus the original seed point is expanded twice. In this case, the first stage of expansion is not completed. In the first stage of expansion, the original seed points are expanded twice, such that too many points may be obtained by expansion and may be beyond the tooth portion. In this case, whether a corresponding position of each expanded point on the two-dimensional projection image falls into the tooth region needs to be determined. In a case that the corresponding position falls into the tooth region, it indicates that the original seed point on the three-dimensional tooth model expands not beyond the tooth portion. In a case that the corresponding position does not fall into the tooth region, the corresponding seed point is no longer used as the target seed point. Accordingly, the first stage of expansion is completed.

In the second stage, the target seed points of the first stage may be expanded by means of the initial curvature threshold and a height. In the second stage, seed points adjacent to the target seed points obtained by the first stage of expansion may be used as seed points to be expanded. Curvatures of these seed points are less than or equal to the initial curvature threshold, and heights of these seed points are greater than a preset standard height. In a case that the two conditions are satisfied, these seed points are also used as target seed points. In a case that one condition is not satisfied, these points are not used as target seed points. In a specific instance, the preset standard height may be a height of a current point.

Moreover, in addition to satisfying the conditions of the curvatures and heights, these seed points need to be located in target regions on their two-dimensional projection image. The target regions are regions obtained by enlarging the tooth regions. That is, on the two-dimensional projection image, the tooth regions are slightly enlarged to obtain the target regions. Then, in the second stage of expansion, in a case that the expanded seed points projected onto the two-dimensional projection image are beyond the target regions, the seed points beyond the target regions are not used as target seed points, that is, backward expansion. The second stage of expansion is completed.

That is to say, firstly, seed points of each tooth are expanded according to a given curvature threshold, and is guaranteed not to expand beyond a range of the tooth region on the two-dimensional projection image, and these points are used as initial points of the tooth. The initial points are expanded again according to a given value (curvature threshold + 0.2 to obtain a target curvature threshold), and are guaranteed not to expand beyond a bounding box range of the tooth region.

Expansion is performed according to a given curvature threshold and height, and is guaranteed not to fall beyond a region (that is, the target region) of a bounding box of the tooth region + an enlarged range. Each tooth boundary point is expanded outwards once (to a vicinity of a slit between the teeth and a gum line), and a distance of expansion may be preset.

The initial seed points are not all final regions of the teeth, and need to be continuously expanded. The solution generates an expanded range according to a two-dimensional projection. The region of the bounding box of the tooth region + the enlarged range refers to a range to which the seed points can be expanded. The region of the bounding box of the tooth region + the enlarged range forms an expanded range according to the two-dimensional projection image. The expanded range may be controlled by means of algorithm parameters.

The reason of expanding the tooth region many times is: separation between adjacent teeth of part of a tooth model is not obvious. A final height limit for tooth region expansion is to reduce the possibility of tooth expansion downward to the gum. The tooth boundary extends outward once. Since the curvature near the gum line is small, the teeth cut directly according to the curvature threshold will be a whole lot smaller than the original teeth, such that expansion is needed.

Besides the first and second stages of expansion, the portion outside the teeth may also be expanded. That is, points of the three-dimensional tooth model corresponding to the outside of the target region on the two-dimensional projection image are used as third seed points. The third seed points are points outside the tooth portion, such as points on the gum portion or gaps between the teeth. These seed points should be expanded to the teeth potion. During expansion, the part seed points may be expanded according to a curvature. In a case that curvatures of the seed points adjacent to the third seed points are greater than the required curvature threshold, the part seed points are used as third seed points together with the third seed points, that is, the points at the portion outside the teeth. It should be noted that in a case that the expanded third seed points are located in the target regions on the two-dimensional projection image, the seed points may be expanded to the tooth portion, such that the seed points needs to be withdrawn. The third seed points located in the target regions are used as non-third seed points.

For the target seed points obtained by the first and second stages of expansion, and the third seed points obtained after expansion, a boundary of the target seed points and the third seed points may be used as a boundary of the teeth.

In a case that a tooth contains a hole, a surrounding condition may be included between the target seed points and the third seed points. For example, some third seed points are surrounded by the target seed points. The hole is recognized as the third seed point since the tooth contains the hole. In this case, a point in a region surrounded by the target seed points is also used as the target seed point.

After expansion is completed, the teeth are cut according to the target seed points and the third seed points, so as to obtain separate teeth. Alternatively, the boundary of the teeth may be smoothened before tooth cutting, and the smoothed boundary is gentler. For example, as shown in Fig. 10, S1-S4 are points of the boundary of the teeth, A1 is a midpoint between S1 and S3, A2 is a midpoint between A1 and S4, ..., all the midpoints A1-An are connected to obtain a smoothed boundary.

After the teeth are cut to obtain the separate teeth, the teeth may be arranged. With a three-dimensional tooth model as an instance, arranging is shown in Fig. 11. An average value of the tooth midpoints of the three-dimensional tooth model is used as a start point, a tooth midpoint of each tooth is used as an end point, and a plurality of vectors may be obtained by connecting. A straight line where two teeth having a largest distance between the tooth midpoints is used as a target straight line (a dotted line in Fig. 11), included angles formed by the vectors and the target straight line are checked, and the teeth are arranged according to the included angles.

It should be noted that a solution for automatically arranging misaligned teeth may include: a teeth arrangement coordinate system is established. A separate tooth feature point is defined, and a local coordinate system of a tooth is established. On this basis, a position and posture of each tooth in a dentition are analyzed from a lower dimension. A weighted fitting optimization method is used to calculate coordinate translation amount and local axis rotation amount of each tooth. An association constraint of the positions and postures of the teeth and a spatial dentition curve is formed. Then, combined with a collision detection method of a rectangular bounding box, an iterative algorithm based on a steepest descent method is designed to adjust the positions and postures of the teeth within a constraint range of the spatial dentition curve. Automatic arrangement for the teeth is completed.

According to another aspect of the examples of the present disclosure, a method for manufacturing a dental device is further provided. The method for manufacturing a dental device may include:

Step 1, a digitized tooth model is obtained.

The tooth model may be a target tooth model in an example of a method for extracting a gum line. Accordingly, the tooth model may be obtained in the same manner as the target tooth model, that is, may be obtained by oral scanning or by traditional impression taking, which is not limited herein.

Step 2, the digitized tooth model is preprocessed.

In an example, a preprocessing action may include steps of a method for cutting a three-dimensional tooth model, so as to obtain cut teeth. The preprocessing operation may further include steps of the method for extracting a gum line to recognize a gum line, and may further include a step of converting the gum line into a cutting line, so as to cut an initial device in subsequent steps to obtain a dental device, or so as to be applied to automatic tooth cutting, gum and crown separation, etc. in some application scenarios. The method for extracting a gum line may be the same as the method for extracting a gum line described in the foregoing examples, and reference may be made for related details to the foregoing contents, which are not repeated herein.

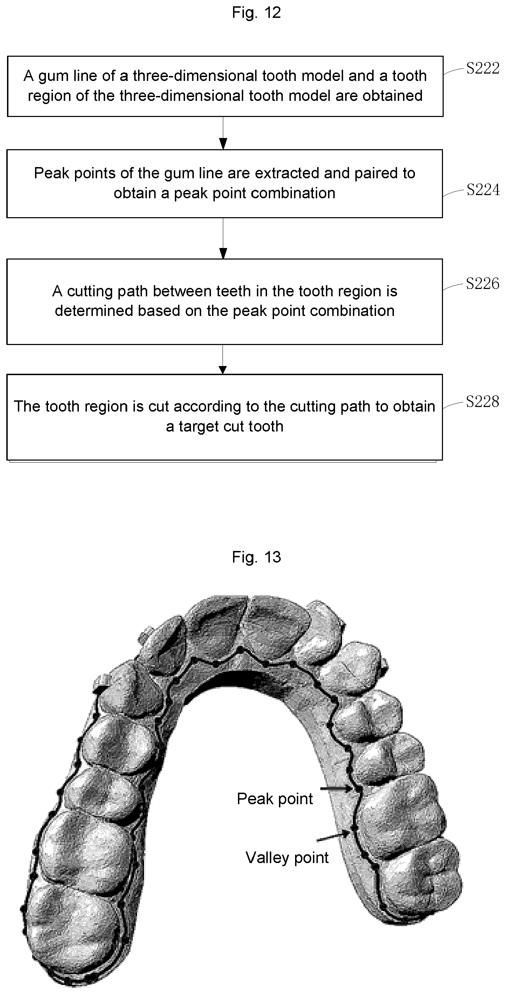

In an example, as shown in Fig. 12, the method for cutting a three-dimensional tooth model in preprocessing may further include:

S222, a gum line of the three-dimensional tooth model and a tooth region of the three-dimensional tooth model are obtained.

S224, peak points of the gum line are extracted and paired to obtain a peak point combination.

S226, a cutting path between teeth in the tooth region is determined based on the peak point combination.

S228, the tooth region is cut according to the cutting path, and a target cut tooth is obtained.

A purpose of the method for cutting a three-dimensional tooth model is to accurately cut each tooth on the three-dimensional tooth model into a separate tooth.

The three-dimensional tooth model described above may be an oral scanning model. The oral scanning model refers to a three-dimensional model including a tooth portion of a user and generated by scanning an interior of an oral cavity of the user. Data of the three-dimensional tooth model are for displaying a shape or style of the three-dimensional tooth model on a display screen on a computer or a server for the convenience of a dentist.

The gum line may be a cutting line between the tooth region and the gum region on the three-dimensional tooth model. The gum line may be determined in various ways, for example, through recognition of a neural network model, or by recognizing a two-dimensional projection image of the three-dimensional tooth model.

The peak points of the three-dimensional tooth model may be points higher than adjacent points on the gum line of the three-dimensional tooth model. For example, on the gum line of the three-dimensional tooth model, a straight line connected by a plurality of points continues to rise, and at one point it begins to fall, then the point is a peak point. The peak point may be understood as a highest point of a gum located between the teeth.

As for pairing of the peak points in the example, every two peak points may be determined as a peak point combination. Two peak points in one peak point combination are used to determine a boundary between two teeth. Each peak point combination includes two peak points.

In the example, after the peak point combination is determined, a cutting path between two teeth in the tooth region may be determined according to the two peak points.

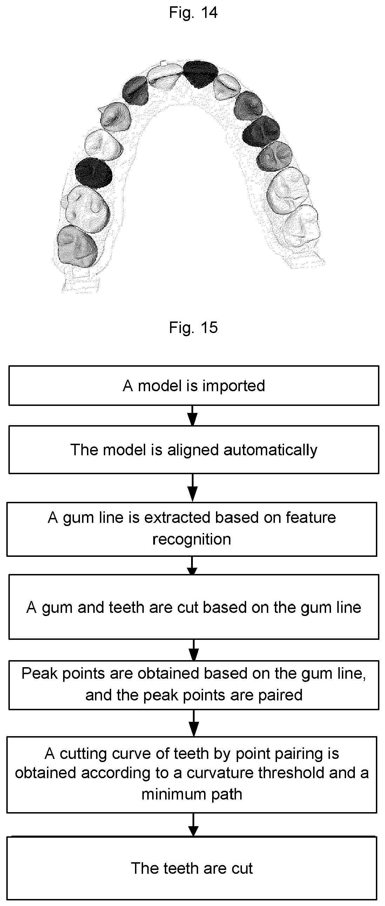

According to the cutting path, the tooth region may be cut to obtain a separate tooth. As shown in Fig. 13, there are peak points and valley points on the gum line between the teeth and the gum of the three-dimensional tooth model (there are also peak points and valley points on the other side of the teeth that are not shown in Fig. 13). Each peak points is a higher point on the gum portion between two teeth (it may be the highest point or not and be located on the gum line). Each valley point is a lower point on the gum line. The peak points are paired, and specifically, peak points of a slit position between every two teeth may be paired into a peak point combination. A cutting path between two teeth may be determined through the peak point combination. Finally, the teeth are cut through the cutting path to obtain separate teeth. A cutting result may be shown in Fig. 14.

According to the present disclosure, the gum line of the three-dimensional tooth model and the tooth region of the three-dimensional tooth model are obtained, the peak points of the gum line are extracted, the peak points are paired to obtain the peak point combinations, the cutting path is determined according to the peak point combinations, the tooth region is cut according to the cutting path, and a target tooth cutting method is obtained, such that each tooth of the three-dimensional tooth model can be accurately cut. An effect of cutting teeth accurately on the three-dimensional tooth model is achieved.

In some examples, the tooth region of the three-dimensional tooth model is obtained. For example, the three-dimensional tooth model is cut based on the gum line, and the tooth region of the three-dimensional tooth model is obtained.

In the example, before the teeth on the three-dimensional tooth model are cut, the three-dimensional tooth model may be cut by using the gum line, and the tooth region of the three-dimensional tooth model is obtained after cutting. Cutting the three-dimensional tooth model may be regarded as hiding or not processing the gum region of the three-dimensional tooth model. The gum region can avoid influencing accuracy of cutting teeth when teeth of the three-dimensional tooth model are cut subsequently.

In some examples, before the gum line of the three-dimensional tooth model is obtained, the method further includes: an initial orientation of the three-dimensional tooth model is determined; and the three-dimensional tooth model is adjusted from the initial orientation to a target orientation.

In the example, after the three-dimensional tooth model of a user is obtained by obtaining oral scanning data of a user, a direction of the three-dimensional tooth model may be adjusted. An objective of adjusting the orientation of the three-dimensional tooth model is to "align" the three-dimensional tooth model, such that all three-dimensional tooth models can be adjusted to a fixed orientation, and curvature recognition is more accurate. For example, the initial orientation may be different for all three-dimensional tooth models. Considering a desktop as a horizontal plane, a direction of an upward normal line of the desktop may be used as the target orientation. Then, after the three-dimensional tooth model is adjusted to the target orientation, the three-dimensional tooth model may be in a state of teeth upwards. After the three-dimensional tooth model is obtained, an orientation of the three-dimensional tooth model may be adjusted to the target orientation, such that the directions of all the obtained three-dimensional tooth models may be unified.

In some examples, determining the initial orientation of the three-dimensional tooth model includes: determining a minimum directed bounding box of the three-dimensional tooth model in a case that the three-dimensional tooth model is a non-closed model, and determining the initial orientation of the three-dimensional tooth model according to the minimum directed bounding box.

In the example, the three-dimensional tooth model may be divided into two types of a closed model and a non-closed model. The closed model is formed by extruding edges and adding a plane as a bottom surface.

For a non-closed three-dimensional tooth model, a minimum directed bounding box may be used to surround the three-dimensional tooth model. Two surfaces of the minimum directed bounding box with largest areas are a tooth facing side of the three-dimensional tooth model and a side of the gum portion away from the teeth. A direction of one of two normal line vectors of the two largest surfaces of the minimum directed bounding box may be selected as the target orientation.

In some examples, determining the initial orientation of the three-dimensional tooth model according to the minimum directed bounding box includes: determining a direction of a preset axis according to the two surfaces of the minimum directed bounding box with the largest areas; obtaining a first average coordinate value of a boundary edge of the three-dimensional tooth model and a second average coordinate value of vertexes of polygon patches of the three-dimensional tooth model based on the direction of the preset axis; and determining the initial orientation according to the first average coordinate value and the second average coordinate value.

In the example, the preset axis may be in a preset direction, such as a coordinate axis direction of a three-dimensional space or other directions. With any direction as the preset direction, the direction of the preset axis is the same as the preset direction.

After the preset axis is determined, the first average coordinate value of the boundary edge of the three-dimensional tooth model and the second average coordinate value of all the vertexes may be obtained. The boundary edge is a boundary between the teeth and the gum. The first average coordinate value of the boundary edge may be understood as an average value of cutting points of the teeth and the gum. The second average coordinate value may be understood as a center of gravity of the three-dimensional tooth model. The center of gravity of the three-dimensional tooth model is biased to the side of the tooth region. Therefore, in the two surfaces of the minimum directed bounding box surrounding the three-dimensional tooth model with the largest areas, the surface closer to the second average coordinate value is a side where the teeth are located. Thus the initial orientation of the three-dimensional tooth model can be determined.

In some examples, determining the initial orientation of the three-dimensional tooth model includes: determining a polygon patch group to which polygon patches on a surface of the three-dimensional tooth model belong in a case that the three-dimensional tooth model is a closed model, wherein a plane angle of any two polygon patches in a same polygon patch group is less than a first threshold; and determining the initial orientation of the three-dimensional tooth model according to a sum of areas of the polygon patches in the polygon patch group.

In the examples, the closed model may be obtained by filling the non-closed model, or may be a closed three-dimensional tooth model obtained by directly performing oral scanning when oral scanning operation is performed on an interior of an oral cavity. The initial orientation of the closed three-dimensional tooth model may be determined by calculating an area of the polygon patch group including the polygon patches.

In some examples, in a case that the three-dimensional tooth model is a closed model, determining the polygon patch group to which the polygon patches on the surface of the three-dimensional tooth model belong includes: selecting any first patch from all patches not classified into the polygon patch group as a patch in a polygon patch group; determining a polygon patch whose plane normal line angle with the first patch is less than the first threshold value as a patch located in the same polygon patch group as the first patch, wherein in an initial case, all polygon patches on the three-dimensional tooth model are not classified into a polygon patch group; selecting any target patch from all the patches not classified into the polygon patch group as a patch in another polygon patch group; and determining a polygon patch whose plane angle with the target patch is less than the first threshold as a patch located in the same polygon patch group as the target patch until all the polygon patches are classified into polygon patch groups.

In some examples, in a case that the three-dimensional tooth model is a closed model, determining the polygon patch group to which the polygon patches on the surface of the three-dimensional tooth model belong includes: selecting any first patch from all patches not classified into the polygon patch group as a patch in a polygon patch group; determining a polygon patch whose normal line angle with a normal line of the first patch is less than the first threshold as a patch located in the same polygon patch group as the first patch, wherein in an initial case, all polygon patches on the three-dimensional tooth model are not classified into a polygon patch group; selecting any target patch from all the patches not classified into the polygon patch group as a patch in another polygon patch group; and determining a polygon patch whose normal line angle with a normal line of the target patch is less than the first threshold as a patch located in the same polygon patch group as the target patch until all the polygon patches are classified into polygon patch groups.

In the example, the polygon patches may be grouped to obtain different polygon patch groups. The polygon patches in each polygon patch group have plane angles less than the first threshold.

During polygon patch grouping, any polygon patch in all the polygon patches may be regarded as a polygon patch in one polygon patch group. Then, the polygon patch is used as a base patch, and in all the polygon patches, each polygon patch whose plane angle with the polygon patch is less than the first threshold or whose normal line angle with a normal line of the polygon patch is less than the first threshold is added to the polygon patch group. Then, in the remaining polygon patches, the plane angle between the plane angle of each polygon patch and the base patch is greater than or equal to the first threshold. The operation is repeated until each polygon patch belongs to a polygon patch group. The polygon patches in each polygon patch group may be considered to lie on a same plane. A sum of areas of the polygon patches in each polygon patch group is calculated. The polygon patches in a polygon patch group with the largest sum of the areas is regarded as a gum side of the closed model. The other side is a tooth side. Thus the initial orientation of the three-dimensional tooth model is determined.

In some examples, obtaining the gum line of the three-dimensional tooth model includes: extracting features of the three-dimensional tooth model, and recognizing the features to obtain the gum line.

In the example, a neural network model may be used to extract the gum line of the three-dimensional tooth model. After data of three-dimensional tooth model are input into the neural network model, the neural network model extracts the features of the three-dimensional tooth model, convolutes and pools the features, and outputs the recognized gum line.

In some examples, extracting the peak points of the gum line includes: determining a coordinate value of each point on the gum line based on the target orientation; and determining the peak points from the gum line according to the coordinate values, wherein the coordinate values of the peak points are greater than coordinate values of adjacent points of the peak points on the gum line.

In the example, since the orientation of the three-dimensional tooth model is adjusted to the target orientation, for a point on the gum line, in a case that a coordinate value of the point in the target direction is greater than that of an adjacent point, the point is regarded as a peak point.

In a case that a distance between two adjacent peak points is too short, one of the points with a larger coordinate value may be regarded as a peak point, and the other point is not regarded as the peak point. This is because the peak point is a slit area between two teeth. Thus the distance between two peak points cannot be too short. If the distance between two peak points is too short, it means that the peak points may be determined incorrectly.

In some examples, pairing the peak points to obtain the peak point combination includes: classifying the peak points into a first peak point group and a second peak point group according to positional relations between the peak points and the three-dimensional tooth model; using each peak point in the first peak point group as a first peak point, and combining the first peak point and a second peak point in the second peak point group as a peak point combination, wherein the second peak point is a peak point in the second peak point group closest to the first peak point and an angle between a connecting line of the first peak point and the second peak point and a teeth midline of the three-dimensional tooth model is greater than a third threshold.

In the example, when the peak points are paired, two peak points with a shortest distance and having a connecting line passing through the teeth midline are paired into a peak point combination. The teeth midline is a line connecting midpoints of the teeth on the three-dimensional tooth model. Since the peak points pass through the connecting line, the peak points on two sides of a tooth are paired, and the peak points on one side of the tooth are not paired.

In some examples, after each peak point in the first peak point group is used as the first peak point, and the first peak point and the second peak point in the second peak point group are combined as a peak points combination, the method further includes: peak points successfully paired are deleted from the first peak point group and the second peak point group; and each peak point in the second peak point group is used as a third peak point, and the third peak point and a fourth peak point in the first peak point group are combined as a peak point combination. The fourth peak point is a peak point in the first peak point group closest to the third peak point. An angle between a connecting line of the third peak point and the fourth peak point and a teeth midline of the three-dimensional tooth model is greater than the third threshold.

In the example, pairing may be performed one by one from peak points on a side of the teeth of the three-dimensional tooth model. For each peak point on the side of the teeth of the three-dimensional tooth model, a peak point with a shortest distance is selected from the other side of the teeth, where an included angle between a connecting line of the two peak points and the teeth midline satisfies a preset threshold condition. The two peak points are combined into a peak point combination. After pairing is completed, all peak points successfully paired are deleted. Then, from the other side of the teeth, pairing is performed again, such that all the peak points are paired.

Further, in a case of searching for a peak point with a shortest distance only according to the distance, a pairing error is likely to occur in a case of oblique teeth or incisors. The above pairing method may avoid the pairing error in such a kind scenario in a manner of whether the included angle satisfies the preset threshold condition.

There may be a variety of situations in which pairing fails, such as a distance between two peak points is too long, or one peak point on one side can be paired with two peak points on the other side.

In some examples, determining the cutting path between the teeth in the tooth region based on the peak point combination includes: determining each peak point combination as a current combination and determining a shortest distance between two peak points in the current combination on the three-dimensional tooth model as a cutting path.

After the peak point combination is determined, the cutting path may be determined according to the peak point combination. The cutting path may be a shortest path between two peak points on the teeth.

In some examples, determining the cutting path between the teeth in the tooth region based on the peak point combination includes: determining each peak point combination as a current combination; determining a shortest distance between two peak points in the current combination on the three-dimensional tooth model as a first path; correcting the first path by superimposing curvatures, obtaining a target path is obtained; and determining the target path as the cutting path.

In the example, the cutting path may be used as a path for cutting the teeth, or the cutting path may be adjusted. After the shortest path between two peak points on the teeth is obtained, the path may be corrected by superimposing curvatures. A corrected path is used as the cutting path.

In some examples, correcting the first path by superimposing curvatures, and obtaining the target path includes: using each point on the first path as a current point, and determining a replacement point for the current point within a preset range on the three-dimensional tooth model, wherein the replacement point is a point satisfying curvature threshold requirements; and using a connecting line of the replacement points as the target path.

In the example, the shortest path is corrected by superimposing curvatures, that is, the points on the path are locally adjusted according to curvature, and each point on the shortest path is corrected. Each point is used as the current point. In a case that on the three-dimensional tooth model, a point that satisfies the curvature threshold requirements is located within a preset range near the current point, the current point is replaced by the point that satisfies the curvature threshold requirements. The points after replacement are connected as a cutting path.

The method for cutting a three-dimensional tooth model is described below in conjunction with an instance.

The method for cutting a three-dimensional tooth model in the present disclosure may be mainly applied to a scenario of orthodontic display. After tooth cutting, tooth positions are adjusted according to an orthodontic solution, and corrected teeth are generated and displayed. Furthermore, the tooth cutting technology may also be applied to orthodontic guide plate design, tooth die model design and temporary tooth design.

In the example, in a case that teeth of a user are to be inspected or receive orthodontic treatment, an oral cavity of the user may be scanned first to obtain data of a three-dimensional tooth model of teeth of the user. The data may be displayed to the user and the dentist by means of a display screen, such that a condition of the teeth may be explained to the user by the dentist.

The three-dimensional tooth model of the user obtained by oral scanning may be a closed or non-closed model. The three-dimensional tooth model includes a tooth region and a gum region. A boundary between the tooth region and the gum region is not labeled. Thus during tooth cutting, a cutting line (a gum line) between the teeth and a gum and a cutting path between the teeth needs to be determined.

That is to say, in the solution, scanning data output by a three-dimensional (3D) scanner are obtained. Based on recognized model features, the model is automatically aligned. Based on the automatically aligned model, feature values of the three-dimensional tooth model are extracted through a geometric algorithm for a curvature. The extracted feature values are filtered and de-noised to obtain the gum line and peak points of the gum line. A pure tooth portion is obtained by separating a tooth portion and a gum portion. The peak points of the gum line are paired. The cutting path between the teeth is determined by the curvature and a shortest path method. All the cut teeth are obtained.

In an example, the method for cutting a three-dimensional tooth model may be applied to an automatic orthodontic production process. Firstly, a three-dimensional digitized model of a patient is obtained. The method is executed on the three-dimensional digitized model to obtain a separate tooth model. Then dislocated teeth are automatically arranged to generate a plurality of orthodontic tooth models. Positioning portions and placement identification information are arranged for the plurality of orthodontic tooth models simultaneously. The plurality of orthodontic tooth models are printed. A preheated polymer material film is pressed on the tooth models to form a shell-shaped film after printing. A bottom of each tooth model (with a film attached to a surface of the tooth model) is photographed by a charge coupled device (CCD). Then identification information is recognized through an optical character recognition (OCR) technology. The identification information is transmitted to a server. The server calls up a corresponding marking instruction or cutting instruction in a database according to the identification information. A 3D label to be printed is determined when the marking instruction is executed. Boundary constraints of the 3D label are determined. A label region is determined from a base plate according to the boundary constraints. The label region is used to allow the 3D label to be printed. The 3D label is carved to the label region. When the cutting instruction is executed, the image collecting device collects an image of a bottom of a product to be cut. An identification code in the image collected by the image collecting device is recognized. The identification code or identification information contained in the identification code is transmitted to a receiving terminal. The receiving terminal matches the corresponding cutting instruction. A cutting execution terminal cuts the product to be cut according to the cutting instruction. A bottom surface of each product to be cut is provided with a corresponding identification code. Different products correspond to different identification codes. The product to be cut is placed above the image collecting device. The identification code in the image, and the identification code corresponding to a corresponding cutting instruction may be recognized by collecting the image of the bottom of the product to be cut. According to the cutting instruction, the cutting execution terminal executes corresponding cutting operation to remove redundant potions and finally obtain the product.

It should be noted that a solution for automatically arranging misaligned teeth may include: a teeth arrangement coordinate system is established. A separate tooth feature point is defined, and a local coordinate system of a tooth is established. On this basis, a position and posture of each tooth in a dentition are analyzed from a lower dimension. A weighted fitting optimization method is used to calculate coordinate translation amount and local axis rotation amount of each tooth. An association constraint of the positions and postures of the teeth and a spatial dentition curve is formed. Then, combined with a collision detection method of a rectangular bounding box, an iterative algorithm based on a steepest descent method is designed to adjust the positions and postures of the teeth within a constraint range of the spatial dentition curve. Automatic arrangement for the teeth is completed.

Fig. 15 is a flowchart of the example. The three-dimensional tooth model is cut in the example mainly as follows:

1 A model is imported

A model is imported, that is, the three-dimensional tooth model is imported. The three-dimensional tooth model is a model obtained by oral scanning. The three-dimensional tooth model is imported into a system. The system may display a structure of the three-dimensional tooth model through a display screen.

The three-dimensional tooth model may be a scanned model (non-closed model) output by a 3D scanner. The input three-dimensional tooth model may be in any direction. In the solution, any other types of tooth models with planes do not influence implementation of the disclosure.

The three-dimensional tooth model is a digitized three-dimensional body composed of a series of polygon patches.

2 The model is automatically aligned

The three-dimensional tooth model may have various orientations after being imported into the system. Thus the direction of the three-dimensional tooth model may be adjusted to a target orientation first, such that the three-dimensional tooth model is aligned.

For the imported three-dimensional tooth model, features of the three-dimensional tooth model are recognized. An objective of recognizing the features is to find an aligning angle of the three-dimensional tooth model. Since different tooth models have different application types, their features are not consistent, and the tooth models may be classified by feature extraction according to different tooth model types. During aligning, an initial orientation of the three-dimensional tooth model needs to be determined and then adjusted to the target orientation.

There are a plurality of methods to determine the initial orientation. For example,

1) In a case that the model is an oral scanning model, such a model is a non-closed model, an oriented bounding box (OBB) technology is first applied to determine a bounding box of a bounding model. A direction of a normal line of two surfaces with the largest areas in six surfaces of the bounding box is determined as a final teeth orientation. The method determines a size and direction of the box according to a geometry of an object, and the box does not have to be perpendicular to a coordinate axis. In this way, a most appropriate and compact bounding box may be selected.

After the bounding box is obtained, a first average coordinate value of a boundary edge of the three-dimensional tooth model and a second average coordinate value of vertexes of polygon patches of the three-dimensional tooth model are obtained based on a direction of a preset axis. Then, a side where a surface is closer to the second average coordinate value is determined as a tooth facing side. The initial orientation of the three-dimensional tooth model is determined.

According to an angle of a target, a rotation matrix is used to rotate the bounding box, such that the model is rotated to the target orientation.

2) In a case that the model is a closed model with a flat bottom plane, the model is aligned according to a manner that a largest flat bottom plane of the model is close to the bottom. A method for detecting a largest surface of the teeth is as follows: a polygon patch is set, the set polygon patch and the 3D tooth model composed of polygon patches are superimposed, an error threshold e is set, when e is greater than a value, the set polygon patch and a patch on the 3D tooth model are considered to be in different planes; and otherwise, they are considered to be in a same plane. When the set polygon patch and a patch of the tooth model are in the same plane, the set polygon patch and the patch are superimposed together, a next polygon patch is searched for, and an error threshold is determined. The above steps are repeated until a largest plane of the tooth model is obtained. A current normal line vector of the largest plane of the tooth model is determined. A target normal line vector of the largest plane of the tooth model is obtained.

According to a cross multiplication operation method, a rotation angle and a rotation axis are solved according to vector values before and after rotation (the rotation angle and the rotation axis are obtained by solving the current normal line vector and the target normal line vector through the cross multiplication operation method). The cross multiplication operation method is a binary operation for vectors in a vector space. An operation result of the cross multiplication operation method is a vector instead of a scalar. According to the rotation angle and the rotation axis, any model can be rotated to a desired spatial position.

3) A gum line is extracted based on feature recognition

An objective of recognizing and extracting the gum line of the three-dimensional tooth model is to cut the teeth of the three-dimensional tooth model according to the gum line. The gum line may be determined in a plurality of manners. For example, the gum line may be determined by a neural network model. The three-dimensional tooth model may be input into the neural network model, and the gum line of the three-dimensional tooth model may be marked by the neural network model. Alternatively, the three-dimensional tooth model may be projected onto a two-dimensional plane, and then tooth regions on the two-dimensional plane may be recognized, and then correspond to portions of the three-dimensional tooth model. Thus a boundary line, that is, the gum line, between the teeth and a gum is marked.

For example, the neural network model recognizes the gum line. After the model is placed at a specified position, feature values of the tooth model are extracted according to a geometric calculation method for a curvature, and are filtered and de-noised, and a contour of the three-dimensional tooth model may be obtained. The geometric calculation method for a curvature is to indicate a degree of convexity of a surface for a rotation rate of a tangent angle of a surface on the tooth model to an arc length, and the degree of convexity is also referred to as a feature in the solution. The curvature method may be used to obtain feature values of concave regions and convex regions of the tooth model (a real gum line on the tooth model is also reflected by the concave-convex).

In order to obtain an initial feature value of the tooth model, noise needs to be removed. The noise removal means that besides a gum line region, other regions of the teeth also have bumps, which are also considered as features, these features influence subsequent fitting to a contour line, such that these features need to be filtered or removed to finally obtain an optimal feature value.

The feature values are simplified into a contour line, that is, an initial gum line. Since the initial gum line is not a smooth curve with local folding and deviation, a principal component analysis method is used to process the initial gum line, so as to obtain points in a main direction. The points in the main direction are determined in a manner of whether the data are consistent with the main direction. For example, the points in the main direction may be determined according to positions where a curve bends and is redirected at peaks and valleys. In view of the situation, the solution uses the principal component analysis method to obtain a main contour shape, determine the points in the main direction of the contour, avoid unsmooth regions of the line, and obtain the final smooth gum line.

4) A gum and teeth are cut based on the gum line

After the gum line is recognized, a tooth portion and a gum portion of the three-dimensional tooth model may be cut according to a position of the gum line. An objective of cutting the tooth portion and the gum portion is to make tooth cutting more accurate.

5) Peak points are obtained based on the gum line and paired

The above points that determine the main direction of the contour are also configured to determine the peak points and valley points. In the solution, insertion control points are determined according to a curvature and a degree of curving the gum line (the peak points and the valley points are all curved areas). Since the valley points are always lower than the peak points, the peak points may be determined according to up-down distances (height differences in a target direction), and the valley points may be filtered, such that complete peak points are obtained.

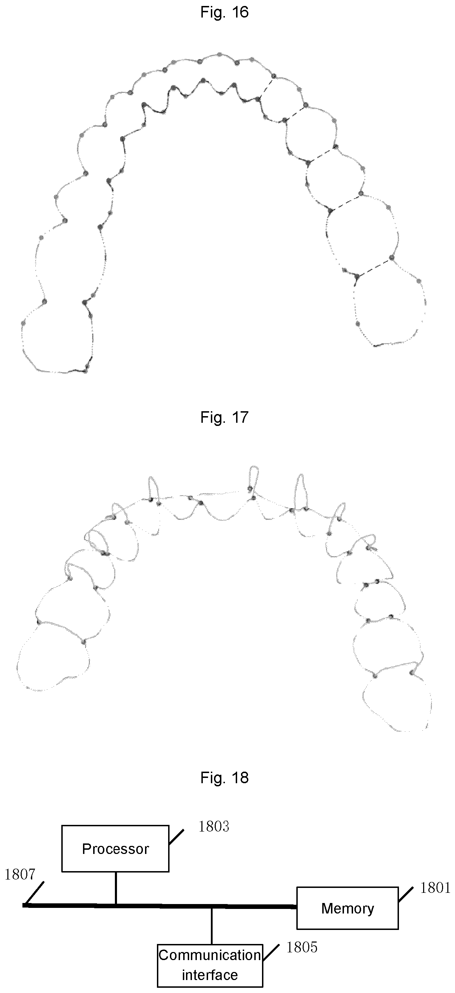

After the peak points are obtained, two peak points with a shortest distance and having a line passing through a teeth midline are paired as a start point and an end point of tooth cutting. For example, as shown in Fig.16, in Fig. 16, peak points on two sides of a tooth are paired. (One peak point combination connected by a dashed line in Fig. 16, not all dashed lines are shown).

6) A cutting curve of teeth is obtained by point pairing according to a curvature threshold and a minimum path

Since the teeth are contacted and connected before, the teeth should be cut through curves to form independent separate teeth. In the solution, an initial cutting curve is determined in a shortest distance manner. A shown shortest distance is from a paired start peak point to a paired end peak point along a surface of a triangular patch of the tooth model by the shortest distance. Since the shortest distance is not a best cutting line, the shortest distance is corrected by superimposing curvatures in the solution. Because contact between the teeth is uneven, a shortest cutting line needs to fall within a range of a large curvature. A final cutting line is established by superimposing the two methods. A determined cutting path is shown in Fig. 17.

7) The teeth are cut according to the cutting curve

All the teeth are cut according to the cutting curve, and the cut teeth are obtained.
In an example, the method for extracting a gum line may include:

S202, a target tooth model is obtained, where the target tooth model includes a plurality of polygon patches.

S204, edge categories of edges of the plurality of polygon patches are determined, where the edge categories include tooth edges and gum edges.

S206, a gum line of the target tooth model is determined according to the edge categories of the edges.

The target tooth model described above may be an oral scanning model. The oral scanning model refers to a three-dimensional model including a tooth portion and a gum portion of a user and generated by scanning an interior of an oral cavity of the user. Certainly, the target tooth model may be obtained by an obtaining impressions, wherein the obtaining impression includes following operation: impressions of the tooth portion and the gum portion is taken; then the impressions are scanned to obtain the digitized three-dimensional model. Data of the three-dimensional tooth model are for displaying a shape or style of the three-dimensional tooth model on a display screen on a computer or a server for the convenience of a dentist.
The polygon patches are patches forming the surface of the target tooth model (a tooth portion and a non-tooth portion, the surface of the entire model), and specifically may be triangular, quadrilateral, pentagonal or the like patches. Each polygon patch is located on a plane. Different polygon patches may be located on a same plane or not. The surface of the target tooth model is composed of the plurality of polygon patches. Each polygon patch includes a plurality of edges. Two adjacent polygon patches share one edge. End points of each edge are vertexes of a corresponding polygon patch. One vertex may be shared by a plurality of polygon patches.
It should be noted that the target tooth model includes a tooth portion and a gum portion. The gum line is a boundary between the tooth portion and the gum portion. The edges that form the polygon patches may be located on the tooth portion or the gum portion, and thus may be classified as tooth edges and gum edges. In view of this, in the example, the gum line of the target tooth model may be determined according to the edge categories of the edges of the polygon patches. The determined gum line is used to cut the tooth portion and the gum portion of the target tooth model.
In the example, after the target tooth model is obtained, the categories of the edges may be determined by determining the edge categories of the edges of the polygon patches on the target tooth model, and then the gum line of the target tooth model is determined. The edges, as a component of the polygon patches, may further refine the target tooth model, such that accuracy of extracting the gum line of the tooth model can be improved.
In some examples, determining the edge categories of the edges of the plurality of polygon patches includes: obtaining target features of the edges of the plurality of polygon patches; determining the edge categories of the edges of the plurality of polygon patches based on the target features.
In the example, the target features include geometric features. Certainly, in other examples, the target features may also include non-geometric features, which are not specifically limited herein. In the example, the edge categories may be determined by extracting the target features of the edges of the polygon patches and recognizing the target features. It should be noted that when the target features include geometric features, a topological structure relation of a space is considered during edge classification, such that accuracy of gum line recognition is improved.
In the example, the target features of all the edges on the target tooth model may be extracted, and alternatively, the target features of some edges may be selected. The edge categories of the edges are determined by recognizing the extracted target features of the edges.

In some example, the target features of an edge include at least one of the following: a dihedral angle between a first polygon patch and a second polygon patch of a common edge, a first curvature value of a first vertex of the edge, a second curvature value of a second vertex of the edge, a first distance from a vertex of the first polygon patch away from the edge to the edge, a second distance from a vertex of the second polygon patch away from the edge to the edge, a first diagonal angle of the edge in the first polygon patch, and a second diagonal angle of the edge in the second polygon patch. In an application scenario, the target features of an edge include the seven items mentioned above.

As another instance, the target features of an edge may include at least one of the following features: a dihedral angle between a first polygon patch and a second polygon patch of a common edge, a first curvature value of a first vertex of the edge, a second curvature value of a second vertex of the edge, a first spatial coordinate of the first vertex, a second spatial coordinate of the second vertex, a length of the edge, an included angle between the edge and an adjacent edge, a first distance from a vertex of the first polygon patch away from the edge to the edge, a second distance from a vertex of the second polygon patch away from the edge to the edge, a first diagonal angle of the edge in the first polygon patch, a second diagonal of the edge in the second polygon patch, a first normal line of the first vertex, a second normal line of the second vertex, a normal line of the first polygon patch, and a normal line of the second polygon patch.

The dihedral angle between the first polygon patch and the second polygon patch of a common edge is an angle between the two polygon patches sharing an edge. The first vertex and the second vertex are two end points of the edge. Each curvature value is a curvature value of a patch corresponding to the vertex at the vertex. The curvature is a rate of rotation of a tangent angle to an arc length for a point on a curve, is defined by a differential, and indicates how far the curve deviates from a straight line. The curvature indicates a numerical value of a degree of curving of a curve at a point. The greater the curvature is, the more curved the curve corresponding to the point is at the point. The above spatial coordinates are coordinates in a three-dimensional rectangular coordinate system where the vertexes are located. The three-dimensional rectangular coordinate system may be a coordinate system in which the target tooth model is located. For example, a plane in which a base plate of the target tooth model is located may be defined as an xOy plane, and a normal line direction of the plane may be defined as a z axis. Directions of coordinate axes may be predetermined. For example, a gum surface of the target tooth model is used as a plane where an X axis and a Y axis are located, and a teeth direction is used as a Z axis direction. The length of the edge is a distance between the two end points of the edge. Since a plurality of adjacent edges of the edge may be provided, a plurality of included angles between the edge and the adjacent edges may be provided, ranging from 0 to 180 degrees. When the polygon patch is a quadrilateral patch or a polygon patch with more straight sides, one or more distances from the vertexes away from the edge to the edge may be provided, and the distance from each vertex to the edge may be different. When the polygon patch is a triangular patch, only one vertex away from the edge is provided, such that only one distance from the vertex to the edge is provided. Similarly, the edge may have one or more diagonal angles in the polygon patch. When a plurality of diagonal angles are provided, the diagonal angles may be different. For example, the polygon patches are a triangular patch 302, a quadrilateral patch 304, and a pentagonal patch 306 respectively. Each edge of the three polygon patches corresponds to at least one or at least two of the above features.

For example, when the features are extracted, a polygonal patch corresponding to an edge of the target tooth model is found. An included angle between normal lines of two polygonal patches may be obtained by cross multiplication according to normal lines of the polygonal patches, and a dihedral angle between the two polygonal patches is complementary to the included angles between the two polygonal patches and the corresponding normal line respectively, such that the dihedral angle between the two polygonal patches may be obtained by subtracting the included angles between the normal lines by 180°. Curvature values of two vertexes may be obtained through a curvature geometry calculation method or other methods. According to a point-to-line distance, a distance from the vertex of the polygon patch away from the edge to the edge may be obtained; according to the orientation of the two edges, two vectors can be obtained. An included angle between two edges at the vertex of the polygon patch may be obtained through point multiplication of the two vectors, that is, the diagonal angle of the edge in each polygon patch may be obtained. It should be noted that the spatial coordinates corresponding to the vertexes and proximity relations of the points, the edges and the surfaces are known, and the target features may be obtained based on this.

In some examples, determining the edge categories of the edges according to the target features includes: raising a dimension of the target features of the edges in an initial dimension, and obtaining first features in a first dimension; reducing a dimension of the first features, and obtaining second features in a target dimension; and determining each edge as a tooth edge or a gum edge according to a magnitude of values of the second features. That is to say, in the example, the target dimension may be a two-dimension, corresponding to the tooth edge and the gum edge respectively. Certainly, in other example, the target dimension may also be a multi-dimension, as long as the edge category of the corresponding edge can be determined, which is not limited herein.

In the example, after the target features of the edge are extracted, the initial dimension of the target features may be determined according to the categories and the number of the extracted target features. First, the dimension of the target features is raised to the first dimension to obtain the first features. Then the dimension of the first features is reduced to the target dimension. However, since the dimension is raised first and then reduced, the first features after dimension reduction are no longer the target features, but the second features in the target dimension. Accordingly, the edge category of the corresponding edge can be obtained.

With the initial dimension being a seven-dimension as an instance, the seven-dimensional target features of the corresponding edge are input into an edge classification network to classify the corresponding edge. For example, firstly, an input dimension is 7 dimensions, which correspond to 7 geometric features respectively. After convolution operation once, the dimension of the target features is raised to N dimensions. Secondly, after k times of identical convolution operation, the dimension of the target features is kept unchanged, and then the number of edges is reduced by means of pooling operation. Then the above process, that is, one dimension-raising convolution + k same-dimensional convolutions + pooling, is repeated, such that the dimension of the target features becomes 2N, 4N and 8N in turn. It should be noted that in a last dimension-raising cycle, after k same-dimensional convolutions, unpooling operation is performed to gradually recover the number of the edges. Then a dimension-reducing convolution is performed to reduce the dimension of the features to 4N dimensions. After k same-dimensional convolutions, the dimension of the features remains unchanged. Then the above process, that is, unpooling + one dimension-reducing convolution + k dimension-raising convolutions, is repeated, such that the dimension of the features becomes 4N, 2N, N in turn. It needs to be explained that after a last dimension-reducing cycle, the dimension of the features is further directly reduced to 2 dimensions. Final values of the two dimensions are probability values of the edges being the tooth edge and the gum edge. The category with a higher probability value may be selected as the edge category. Accordingly, each edge of the model is classified as a tooth edge or a gum edge.

It should be noted that what described above is only an instance and not a limitation. For example, the initial dimension is not limited to 7 dimensions. A number of cycles in the dimension raising and reducing processes are not limited. N is an integer not less than 7, such as 7, 8, 9, 10, etc., and may be adjusted according to actual conditions in specific embodiments.

It should be further noted that the convolution and the pooling in the step are different from convolution operation and pooling operation of an image neighborhood. The convolution operation and the pooling operation are performed based on the edges in the target tooth model.

In the convolution operation, in order to eliminate an influence caused by different edge sequences (such as: (a,b,c,d) and (c,d,a,b)), original edge features are processed according to the following equation (1), where f(a) and f'(a) represent an original feature and a processed feature of edge a respectively, and the convolution operation on edge e after processing is defined as equation (2), where $\{w_k, |k = 0, 1, 2, 3, 4\}$ denotes weight parameters to be trained. In the pooling operation, 5 edges (e, a, b, c, d) are transformed into 2 edges (h, i), which is defined in equation (3). The unpooling operation is opposite the pooling operation, 2 edges (h, i) are transformed into (e', a', b', c', d'), which is defined in equation (4).

$$
\begin{aligned}
f'(a) &= \left| f(a) - f(c) \right| \\
f'(b) &= f(a) + f(c) \\
f'(c) &= \left| f(b) - f(d) \right| \\
f'(d) &= f(b) + f(d)
\end{aligned}
\quad (1)
$$

$$
C(e) = w_0 f'(e) + w_1 f'(a) + w_2 f'(b) + w_3 f'(c) + w_4 f'(d) \quad (2)
$$

$$
\begin{aligned}
f(h) &= \frac{1}{3}(f(e) + f(a) + f(b)) \\
f(i) &= \frac{1}{3}(f(e) + f(c) + f(d))
\end{aligned}
\quad (3)
$$

$$
\begin{aligned}
f(e') &= \frac{1}{2}(f(h) + f(i)) \\
f(a') &= f(b') = f(h) \quad (4) \\
f(c') &= f(d') = f(i)
\end{aligned}
$$

Moreover, before edge classification, the classification network needs to be trained to obtain a network weight value and values of some hyperparameters such as k and N. For example, a plurality of groups of geometric feature data and a classification value (for example, a gum corresponds to 0, and a tooth corresponds to 1) of the category of the correspond edge are input into the edge classification network and trained. For example, 500 groups, 1000 groups or 2000 groups of classified tooth model data are input. Each group of tooth model data includes geometric feature data and classification data corresponding to 5000, 10000 or 20000 edges. Thus the classification network can classify the edge according to the geometric feature data of the edge. It should be noted that in combination with a deep learning technology, the method based on edge classification in the example can automatically recognize the gum line data, so as to greatly improve recognition accuracy and efficiency, improve efficiency of an entire dental diagnosis process such as invisible orthodontics, and enhance user experience in diagnosis and treatment.

In some examples, determining the gum line of the target tooth model according to the edge categories of the edges includes: determining patch categories of the polygon patches according to the edge categories, wherein the patch categories include a tooth patch and a gum patch; and extracting the gum line based on common edges of adjacent polygon patches of different patch categories.

In the example, after the categories of the edges are determined, the patch categories of the polygon patches may be determined according to the categories of the edges. It can be understood that a tooth patch is a patch located at the tooth portion of the tooth model, and a gum patch is a patch located at the gum portion. The patch categories are determined according to the edge categories of the edges. For example, the patch categories of the polygon patches may be determined according to all edges of the polygon patches, and alternatively, the patch categories of the polygon patches may be determined according to at least one edge of the polygon patches.

In some examples, determining the patch categories of the polygon patches according to the edge categories includes: in each polygon patch, determining the polygon patch as the gum patch when a number of gum edges is greater than a number of tooth edges; and in each polygon patch, determining the polygon patch as the tooth patch when the number of gum edges is less than the number of tooth edges.

In the example, the patch category of each polygon patch is determined according to the edge categories of all edges of the polygon patch. According to the number of tooth edges and the number of gum edges in the polygon patch, it is determined whether the polygon patch is a tooth patch or a gum patch.

All edges of the target tooth model are traversed, and an edge is marked as a common edge in a case that two patches corresponding to the edge have different categories.

In some examples, extracting the gum line based on the common edges of adjacent polygon patches of different patch categories includes: determining first feature points based on vertexes of the common edges; determining target feature points from the first feature points according to a curvature relation; and determining the gum line according to the target feature points.

In the example, since the patch categories of the polygon patches may be determined according to the edge categories of the edges, after the patch categories are determined, the common edges of the polygon patches of different categories are a boundary between the tooth patches and the gum patches. Therefore, the gum line may be determined from all common edges of the tooth patches and the gum patches.

In the example, the first feature points may be determined from the vertexes of the common edges, then the target feature points may be determined from the first feature points, and the gum line may be determined according to the target feature points. Target feature points may be calculated according to the curvatures.

In the example, a vertex of one common edge may be used as a start point, connected common edges may be searched for, and the vertexes of the connected common edges may be recorded counterclockwise or clockwise as feature points. The first feature points may be all or some of the recorded feature points. For example, the first feature points are located on the initial tooth model, such that accuracy of the extracted gum line is higher. The target feature points are feature points with specific features in some of the first feature points.

In some examples, determining the first feature points based on the vertexes of the common edges includes: determining closest points of the vertexes of the common edges on the initial tooth model as the first feature points in a case that the target tooth model is a model obtained by performing edge contraction processing on the initial tooth model; determining the vertexes of the common edges as the first feature points in a case that the target tooth model is the initial tooth model.

The initial tooth model is an initially obtained tooth model. The target tooth model may be obtained by performing edge contraction on the initial tooth model. Alternatively, the initial tooth model may be directly used as the target tooth model. Whether to perform edge contraction on the initial tooth model influence whether to directly use the vertexes of the common edges as the first feature points. In the example, the first feature points are the vertexes of the common edges or the closest points of the common edges on the initial tooth model.

That is to say, in the example, after a vertex of one common edge is used as a start point, the connected common edges are searched for, and the vertexes are recorded counterclockwise or clockwise as feature points, the recorded feature points may be projected back to the original model, and points closest to the recorded feature points on the original model are found as new feature points.

For example, KDTree may be established according to the vertexes of the initial tooth model. KDTree is a tree data structure that stores instance points in a k-dimensional space for fast retrieval. In the example, all recorded feature points may be traversed, and the closest points to the feature points may be found in the KDTree as new feature points. The new feature points are the first feature points.

In some examples, determining the target feature points from the first feature points according to the curvature relation includes: determining the first feature points having curvatures greater than curvatures of adjacent first feature points in the first feature points as the target feature points.

After the first feature points are determined according to whether the initial tooth model is subjected to edge contraction processing, the target feature points may be determined from the first feature points according to the curvatures of the first feature points. Each first feature point corresponds to one curvature. In the example, in the first feature points, the first feature points having curvatures greater than the curvatures of the adjacent first feature points are determined as the target feature points, that is, a point where the position is more curved in a curve is determined as the target feature point, such that an actual trend of the curve can be better reflected.

After the recorded feature points are projected back to the original model, curvatures of discrete points may be estimated through the geometric algorithm for a curvature, and the feature points with larger curvatures are retained as the target feature points. The reason for retaining the feature points with larger curvatures is that the points with larger curvatures are often turning points, and characteristics of the turning points are stronger and representative.

In some examples, determining the gum line according to the target feature points includes: performing interpolation on the target feature points to obtain interpolated target feature points; and connecting the interpolated target feature points into the gum line in sequence.

In the example, the interpolation is performed on the target feature points. A loss of feature points due to determination of the target feature points from the first feature points may be supplemented, and the target feature points may be combined into a closed curve by the interpolation. The closed curve is the gum line.

When the interpolation is performed on the target feature points, B-spline curve interpolation may be performed on adjacent target feature points. All the points are connected in sequence to form a curve referred to as a gum line. It should be noted that the interpolation on the target feature points is not limited to B-spline curves, and other spline curves may also be used, which is not specifically limited herein.

In some examples, obtaining the target tooth model includes: obtaining an initial tooth model, where the initial tooth model includes a plurality of polygon patches, and a number of edges of the initial tooth model is greater than a number of edges of the target tooth model; and reducing the number of edges of the initial tooth model to a preset number in a preset manner, and obtaining the target tooth model.

In the example, the preset manner may be edge contraction operation or edge collapse operation. An objective of the edge contraction operation on the initial tooth model is to reduce the number of edges of the initial tooth model, so as to obtain the target tooth model. Thus the tooth model is simplified, and a recognition speed of a gum line is improved.

There are several methods to reduce the number of edges of the initial tooth model. One edge or a batch of edges may be reduced once. For example, one edge is reduced at a time until the edges are reduced to the preset number or a preset number of times of reduction is performed. Alternatively, a batch of edges are reduced at a time until the edges are reduced to the preset number or a preset number of times of reduction is performed.

With the edge collapse operation as an instance, the imported initial tooth model may be a tooth model in any direction. The initial tooth model is a digitized three-dimensional body composed of a series of vertexes and polygon patches. After the initial tooth model is imported, the tooth model is downsampled in the manner of edge collapse. After downsampling, the polygon patches of the tooth model are more sparse, the number of polygon patches decreases, and the number of edges also decreases. Downsampling is not stopped until a specified number of edges are obtained.

The imported initial tooth model often has a lot of edges, the number of edges is inconsistent, and the number of edges required for classification through the classification network in subsequent steps is often specific, such that the imported initial tooth model needs to be downsampled, some edges are deleted, and the specified number of edges are retained. The number of edges may be determined by considering a classification speed (the less the number of edges is, the higher the speed is) and an accuracy rate (the more the number of edges is, the higher the accuracy rate is, and the more the number of edges is, the less the information loss of the original model is) of the final gum line. A main process is as follows:

(1) For the vertex of each edge of the initial tooth model, a sum of distances from the vertex to adjacent patches is recorded as an error value, and an initial value is 0. The adjacent patches refer to patches where the vertex is located. The initial error value is 0, which means that the sum of the distances from the vertex to the adjacent patches is 0 before edge contraction.

(2) The error value (refers to the sum of the distances from the vertex to the adjacent patches when the edge is not deleted originally) corresponding to the vertex is calculated after the edge is deleted, edges are arranged according to the error values from small to large, the edge with less error is deleted first. When an edge is contracted to a vertex, two adjacent patches are deleted, and one vertex and three edges are deleted. There are many cases where an edge is contracted into a point. For example, two vertexes of the edge may be moved to any point on the edge to delete the point. A specific position of the point is selected according to a minimum error value in the step.

(3) The above step is repeated, the error value is calculated, and the corresponding edges are deleted until the number of edges reaches the specified number. Accordingly, adjustment of the number of edges of the initial tooth model is completed.

In some examples, the number of edges of the initial tooth model is reduced to the preset number in the preset manner, and the target tooth model is obtained. For example, for each edge of the tooth model to be processed, a sum of distances from the vertex corresponding to each edge to adjacent polygon patches of the vertex corresponding to each edge in the tooth model to be processed is calculated after edge contraction processing is performed on each edge according to each of the plurality of contraction manners. During first processing, the tooth model to be processed is the initial tooth model. An edge and a contraction manner corresponding to a minimum value in the calculated sums of the plurality of distances are determined. Edge contraction processing is performed on the edge corresponding to the minimum value in the contraction manner corresponding to the minimum value, so as to obtain the target tooth model.

In some examples, the edge contraction processing is performed on the edge corresponding to the minimum value in the contraction manner corresponding to the minimum value, so as to obtain the target tooth model. For example, after the edge contraction processing is performed, in a case that the number of edges of the obtained tooth model is not greater than the preset number, the obtained tooth model is determined as the target tooth model. In a case that the number of edges is greater than the preset number, the obtained tooth model is determined as a tooth model to be processed, and the edge contraction processing continues.

In the example, when the edge contraction processing is performed on the initial tooth model, it is also determined which edge is to be contracted. The process may be a cyclic process. That is, one edge is contracted at a time, and steps are cycled, alternatively, a batch of edges are contracted at a time, and steps are cycled until the tooth model to be processed after contraction satisfies conditions. Therefore, at each time of contraction, which edge or which batch of edges are to be contracted needs to be determined.

In the example, the initial model may be used as the model to be processed, and an edge to be contracted may be determined for the model to be processed. A determination method may include steps as follows. Simulation or calculation is performed first. In a case that an edge is contracted, a sum of distances from vertexes corresponding to each edge of the contracted model to adjacent polygon patches of the vertex corresponding to the edge in the tooth model to be processed is calculated. In a case that the sum is a minimum value, the edge is contracted according to the strategy. Every time contraction is performed the calculation is repeated, and the edge contraction is repeated until the number of edges of the tooth model to be processed satisfies the requirement of the preset number. Accordingly, the edge contraction is completed, and the target tooth model is obtained.

Step 3, forming processing is performed on the basis of the preprocessed digitized tooth model, and a formed tooth model, that is, a solid tooth model is obtained.

In some examples, a formed tooth model is printed based on the cut teeth. The formed tooth model is configured to obtain the dental device. That is, the target cut teeth are arranged together to obtain the digital tooth model, and the solid tooth model is obtained based on forming processing (also known as printing). 3D printing may be photocuring 3D printing, such as a stereo lithography apparatus (SLA), digital light processing (DLP), and liquid-crystal display (LCD), or other 3D printing methods, such as three-dimension printing (3DP), multi jet fusion (MJF), fused deposition modeling (FDM), and Polyjet.

In some examples, based on the foregoing preprocessing, the obtained solid tooth model may have a hollowed out base plate, fixation attachments, identification information, etc.

Further, after 3D printing, post-processing steps are further included. The post-processing steps may be selected according to the used 3D printing manner. For example, when the photocuring 3D printing technology is used, post-curing, cleaning and other steps may be selected as post-processing steps.

Certainly, in other examples, a forming manner is not limited to 3D printing, and other forming manners, such as injection molding, may also be used, which is not limited herein.

Step 4, film pressing is performed on the solid tooth model.

After the solid tooth model is obtained, a preheated polymer film may be pressed on the solid tooth model, and a shell-shaped film, that is, an initial device that has not been cut, covering the solid tooth model is obtained. For example, the shell-shaped film covers at least a tooth portion of the solid tooth model.

In an example, an image of the solid tooth model may be collected by an image collection terminal, such as a CCD. The identification information may be further recognized through an OCR technology. Then a corresponding film pressing instruction may be called up from a database based on the identification information. Film pressing may be performed based on the film pressing instruction. The film pressing instruction may include pressure parameters, film preheating time, film pressing temperature, etc.

Step 5, the shell-shaped film is marked.

In the step, the shell-shaped film is marked mainly based on the identification information added in the pre-processing operation. An identification is formed on the shell-shaped film. The initial device with the identification is obtained.

For example, similar to the foregoing steps, an image of the solid tooth model may be collected by the image collection terminal, such as the CCD. Then the identification information is recognized through the OCR technology. A corresponding marking instruction is called up based on the identification information, so as to mark the shell-shaped film based on parameter information included in the marking instruction.

It should be noted that in the method for manufacturing a dental device, the execution of the step is not limited, that is, whether marking is required may be selected according to actual requirements.

Step 6, the initial device is cut to obtain the dental device.

In the step, the initial device is cut based on a cutting line converted from the extracted gum line, such that an useless portion of the initial device is cut off, only a useful portion is retained, and the dental device is obtained. For example, the dental device may be invisible braces.

It should be noted that obtaining of the cutting line in the step may be the same as that in the example of the method for manufacturing a dental device. Reference may be made for the related details to the foregoing embodiments, which are not repeated herein. Moreover, in the example, a sequence of step 5 and step 6 is not limited.

In an example, similar to the foregoing steps, an image of the solid tooth model may be collected by the image collection terminal, such as the CCD. Then the identification information is recognized by the OCR technology. A corresponding cutting instruction is called up based on the identification information, so as to cut the initial device based on parameter information included in the cutting instruction.

According to yet another aspect of the examples of the present disclosure, as shown in Fig. 18, an apparatus for cutting a three-dimensional tooth model is provided. The apparatus includes a memory 1801 and a processor 1803. The memory stores a computer program. The computer program executes the method for cutting a three-dimensional tooth model when run by the processor.

It should be noted that instances and application scenarios implemented by the above modules and corresponding steps are the same, but are not limited to the contents disclosed in the above examples. It should be noted that as a part of the apparatus, the above modules may operate in a hardware environment as shown in Fig. 1, or may be implemented by software or hardware. The above apparatus may further include other parts, such as a communication interface 1805 and a connection line 1807.

According to still another aspect of the examples of the present disclosure, a computer program product or a computer program is further provided. The computer program product or the computer program includes a computer instruction. The computer instruction is stored in a computer-readable storage medium. A processor of a computer device reads the computer instruction from the computer-readable storage medium. The processor executes the computer instruction to cause the computer device to execute steps of any of the examples described above.

When the example of the present disclosure is specifically implemented, reference may be made to the above examples, and corresponding technical effects may be achieved.

It is to be understood that the examples described herein may be implemented in hardware, software, firmware, middleware, microcode, or their combinations. For hardware implementation, a processing unit may be implemented in one or more application specific integrated circuits (ASICs), digital signal processing (DSP), digital signal processing devices (DSPDs), programmable logic devices (PLDs), field-programmable gate arrays (FPGAs), general purpose processors, controllers, microcontrollers, microprocessors, other electronic units configured to execute the functions described in the present disclosure, or their combinations.

For software implementation, the technology described herein may be implemented by units that execute the functions described herein. A software code may be stored in the memory and executed by the processor. The memory may be implemented in the processor or external to the processor.

Those of ordinary skill in the art may appreciate that the units and algorithm steps of the instances described in conjunction with the examples disclosed herein may be implemented in electronic hardware, or a combination of computer software and electronic hardware. Whether these functions are performed with hardware or software depends on the specific application and design constraints of the technical solution. Those skilled in the art can use different methods to implement the described functions for each particular application, but such an implementation should not be deemed as falling beyond the scope of the present disclosure.

Those skilled in the art will clearly appreciate that, for convenience and conciseness of description, reference can be made to corresponding processes in the foregoing method examples for specific working processes of the above systems, devices and units, which are not repeated herein.

In the several examples provided in the present disclosure, it should be understood that the disclosed apparatuses and methods can be implemented in other ways. For example, the device examples described above are merely illustrative. For example, division of the modules is merely division of logic functions. Other division methods may be employed during actual implementation. For example, a plurality of modules or assemblies may be combined or integrated into another system, or some features may be omitted or may not be executed. Further, mutual coupling, direct coupling, or communication connection shown or discussed may be indirect coupling or communication connection through some interfaces, apparatuses, or units in an electrical or mechanical manner, etc. The units illustrated as separate components may be physically separated or not, and the components shown as units may be physical units or not, that is, may be located in one place, or may also be distributed over a plurality of network units. Some or all of the units may be selected according to actual needs to achieve the objective of the solution of the examples. In addition, all function units in each example of the present disclosure may be integrated into one processing unit. Each unit may also be physically present alone. Two or more units may also be integrated into one unit.

If being implemented in the form of software function units and sold or used as independent products, the functions may be stored in one computer-readable storage medium. Based on such understanding, the technical solutions of the examples of the present disclosure in essence, the part that contributes to the prior art, or some of the technical solutions may be embodied in the form of a software product. The computer software product is stored in one storage medium and includes several instructions configured to enable a computer device (which may be a personal computer, a server, or a network device) to execute all or some of the steps of the method in each example of the present disclosure. The foregoing storage medium includes: a USB flash disk, a mobile hard disk, a read-only memory (ROM), a random access memory (RAM), a magnetic disk, an optical disk and other media capable of storing program codes. It should be noted that relation terms herein such as "first" and "second" are merely used to distinguish one entity or operation from another entity or operation without necessarily requiring or implying any such an actual relation or order between these entities or operations. Moreover, the terms "comprise", "include", or their any other variations are intended to cover non-exclusive inclusions. Therefore, a process, method, article, or device including a series of elements not only includes those elements, but also includes other elements that are not explicitly listed, or further includes inherent elements of such a process, method, article, or device. Without more restrictions, the elements defined by the sentence "comprise a ..." and "include a ..." do not exclude the existence of other identical elements in the process, method, article, or device including the elements. What are described above are merely particular embodiments of the present disclosure, through which those skilled in the art can understand or practice the present disclosure. Various modifications to these examples will be apparent to those skilled in the art, and the general principles defined herein can be implemented in other examples without departing from the spirit or scope of the present disclosure. Thus, the present disclosure is to accord with the widest scope consistent with the principles and novel features disclosed herein instead of being limited to the examples described herein.

**Claims**

1. A method for cutting a three-dimensional tooth model, comprising:

   obtaining a two-dimensional projection image of the three-dimensional tooth model, and recognizing the two-dimensional projection image to obtain a plurality of tooth regions;
   determining original seed points corresponding to the plurality of tooth regions in the three-dimensional tooth model;
   expanding the original seed points within a preset range to obtain target seed points of teeth in the three-dimensional tooth model; and
   cutting the three-dimensional tooth model based on the target seed points of the teeth to obtain cut teeth.

2. The method as claimed in claim 1, wherein the expanding the original seed points within a preset range to obtain target seed points of teeth in the three-dimensional tooth model comprise:

   determining tooth edges according to the original seed points, wherein the tooth edges are edges of a surface of the three-dimensional tooth model covering all of the original seed points of the tooth regions;
   determining non-target seed points corresponding to regions other than the plurality of tooth regions in the three-dimensional tooth model, and determining gum edges according to the non-target seed points, wherein the gum edges are edges of a surface of the three-dimensional tooth model covering all of the non-target seed points;
   determining, on the surface of the three-dimensional tooth model, any one point on a side of each tooth edge away from the gum edge as a source point, and determining any one point on a side of the gum edge away from the tooth edge as a terminal point;
   constructing a plurality of flow networks according to the source points and the terminal points, such that seed points between the source points and the terminal points are nodes of the flow networks, wherein any two adjacent nodes are connected, and the seed points are vertexes of triangular patches; and
cutting the flow networks through a minimum cut algorithm, and determining the nodes connected to the source points in the cut flow networks as the target seed points of the

3. The method as claimed in claim 2, wherein the determining non-target seed points corresponding to regions other than the plurality of tooth regions in the three-dimensional tooth model, and determining gum edges according to the non-target seed points comprise:

cutting the teeth on the three-dimensional tooth model according to the plurality of tooth regions preliminarily, and obtaining a plurality of preliminary cutting regions, wherein the preliminary cutting regions correspondingly cover the tooth regions one to one;
determining groups of non-target seed points corresponding to the regions other than the tooth regions in the preliminary cutting regions; and
determining the corresponding gum edges according to the groups of non-target seed points, wherein each gum edge is an edge of the surface of the three-dimensional tooth model covering one group of non-target seed points, and the gum edges corresponds one to one to the teeth.

4. The method as claimed in claim 2, wherein the cutting the flow networks through a minimum cut algorithm, and determining the nodes connected to the source points in the cut flow networks as the target seed points comprise:

obtaining geometric features of a triangular patch corresponding to two adjacent nodes, wherein the geometric features comprise one or more of a side length of a target edge, an angle between a normal line corresponding to two adjacent nodes and the target edge, an average curvature between the two adjacent nodes, and a distance between the target edge and a third vertex of the triangular patch, and the target edge is an edge on which the two adjacent nodes are located in the triangular patch;
calculating a weighted average value of each geometric feature, and obtaining a capacity of each target edge; and
cutting the flow networks according to the capacities of the target edges through the minimum cut algorithm, and determining the nodes connected to the source points in the cut flow networks as the target seed points.

5. The method as claimed in claim 1, wherein the expanding the original seed points within a preset range to obtain target seed points of teeth in the three-dimensional tooth model comprise:
expanding the original seed points according to a preset curvature threshold to obtain the target seed points.

6. The method as claimed in claim 5, wherein the expanding the original seed points according to a preset curvature threshold to obtain the target seed points comprise:

expanding the original seed points according to an initial curvature threshold to obtain first seed points; and
expanding the first seed points according to a target curvature threshold to obtain the target seed points, wherein the target curvature threshold is determined according to the initial curvature threshold.

7. The method as claimed in claim 6, wherein the expanding the original seed points according to the initial curvature threshold to obtain first seed points comprise:

determining seed points adjacent to the original seed points as current seed points; and
determining, in a case that curvatures of the current seed points are less than or equal to the initial curvature threshold, the current seed points and the original seed points as the first seed points.

8. The method as claimed in claim 6, wherein the expanding the first seed points according to a target curvature threshold to obtain the target seed points comprise:

determining seed points adjacent to the first seed points as current seed points; and
determining, in a case that curvatures of the current seed points are less than or equal to the target curvature threshold, the first seed points and the current seed points as the target seed points.

9. The method as claimed in claim 6, wherein before the expanding the first seed points according to a target curvature threshold to obtain the target seed points, the method further comprises:
determining a sum of the initial curvature threshold and a preset value as the target curvature threshold, wherein the preset value is a positive number.

10. The method as claimed in claim 6, wherein after the expanding the original seed points according to initial curvature thresholds to obtain first seed points, or after the expanding the first seed points according to a target curvature threshold to obtain the target seed points, the method further comprises:

adjusting the first seed point to be a non-first seed point in a case that a point on the two-dimensional projection image corresponding to the first seed point does not fall into the corresponding tooth region; or
adjusting the target seed point to be a non-target seed point in a case that a point on the two-dimensional projection image corresponding to the target seed point does not fall into the corresponding tooth region.

11. The method as claimed in any one of claims 5-10, wherein after the expanding the original seed points according to curvature thresholds to obtain the target seed points, and before the cutting the three-dimensional tooth model based on the target seed points of the teeth to obtain cut teeth, the method further comprises:

obtaining target regions by expanding the plurality of tooth regions; and
expanding the target seed points according to an initial curvature threshold and a height, in the target regions.

12. The method as claimed in claim 11, wherein the expanding the target seed points according to the initial curvature threshold and the height comprises:

determining seed points adjacent to the target seed points as current seed points; and
determining, in a case that heights of the current seed points are greater than a preset standard height, and curvatures of the current seed points are less than or equal to the target curvature threshold, the current seed points as the target seed points.

13. The method as claimed in claim 12, wherein the determining, in a case that heights of the current seed points are greater than a preset standard height, and curvatures of the current seed points are less than or equal to the target curvature threshold, the current seed points as the target seed points comprises:

determining the current seed points as the target seed points in cases that the heights of the current seed points are greater than a standard height, the curvatures of the current seed points are less than or equal to the target curvature threshold, and corresponding points of the current seed points on the two-dimensional projection image are located in the target regions, wherein the target regions are regions obtained by expanding the plurality of tooth regions; and
determining, in a case that the corresponding points of the current seed points on the two-dimensional projection image are located outside the target regions, the current seed points as non-target seed points.

14. The method as claimed in claim 11, wherein after the expanding the target seed points according to the initial curvature threshold and a height, the method further comprises:

determining seed points adjacent to the expanded target seed points as current seed points;
and
determining the current seed points further as the target seed points.

15. The method as claimed in claim 1, wherein before the expanding the original seed points within a preset range, the method further comprises:

expanding the plurality of tooth regions to obtain target regions;
marking points other than the points of the target regions on the three-dimensional tooth model as third seed points; and
expanding the third seed points according to a curvature threshold.

16. The method as claimed in claim 15, wherein the expanding the third seed points according to a curvature threshold comprises:

determining seed points adjacent to the third seed points as current seed points; and
determining, in a case that curvatures of the current seed points are greater than the curvature threshold, the current seed points as the third seed points.

17. The method as claimed in claim 16, wherein after the determining seed points adjacent to the third seed points as current seed points, the method further comprises:
determining, in a case that points corresponding to the current seed points on the two-dimensional projection image are located within the target regions, the current seed points as non-third seed points.

18. The method as claimed in claim 15, wherein after the expanding the third seed points according to a curvature threshold, the method further comprises:

    determining a first region composed of the third seed points;
    determining a sub-region from the first region; and
    determining, in a case that the sub-region is surrounded by the target seed points, seed points in the sub-region as the target seed points.

19. The method as claimed in claim 1, wherein the obtaining a two-dimensional projection image of the three-dimensional tooth model comprises:

    adjusting an orientation of the three-dimensional tooth model from an initial orientation to a target orientation; and
    projecting the three-dimensional tooth model with the target orientation onto a target surface, and obtaining the two-dimensional projection image.

20. The method as claimed in claim 1, wherein the recognizing the two-dimensional projection image to obtain a plurality of tooth regions comprises:
inputting the two-dimensional projection image into a recognition model, and marking the plurality of tooth regions on the two-dimensional projection image by the recognition model.

21. The method as claimed in claim 1, wherein the determining original seed points corresponding to the plurality of tooth regions in the three-dimensional tooth model comprises:

    determining a vertex of each triangular surface in the three-dimensional tooth model as a current vertex; and
    determining, in a case that a corresponding point of the current vertex on the two-dimensional projection image is located in the plurality of tooth regions, the current vertex as one original seed point.

22. The method as claimed in claim 1, wherein after the cutting the three-dimensional tooth model based on the target seed points of the teeth to obtain cut teeth, the method further comprises:
arranging the cut teeth.

23. The method as claimed in claim 22, wherein the arranging the cut teeth comprises:

    determining an average value of tooth midpoints of all the teeth as a start point, determining the tooth midpoint of each tooth as an end point, and forming a vector for each tooth;
    determining a straight line where two teeth having a largest distance between the tooth midpoints are located as a target straight line; and
    arranging all the teeth according to a magnitude of included angles between the vectors and the target straight line.

24. The method as claimed in claim 1, wherein after the cutting the three-dimensional tooth model based on the target seed points of the teeth to obtain cut teeth, the method further comprises:
smoothing an edge of the teeth, and obtaining a smoothed edge.

25. The method as claimed in claim 24, wherein the smoothing an edge of the teeth, and obtaining a smoothed edge comprise:

    arranging vertexes on the edge of the teeth;
    determining a second vertex in the arranged vertexes as a current vertex, and performing the following operations on the current vertex until the current vertex comprises no rear vertex: determining a center point of a front vertex and a rear vertex of the current vertex as a smooth point; and determining the rear vertex of the current vertex as a new current vertex when one smooth point is obtained, and determining the obtained smooth point as a front vertex of the new current vertex; and

connecting a first vertex on the edge of the teeth to the obtained smooth points in sequence, and obtaining the smoothed edge of the teeth.

26. A method for manufacturing a dental device, comprising:

obtaining cut teeth through the method as claimed in any one of claims 1-22; and
printing a formed tooth model based on the cut teeth, wherein the formed tooth model is configured to obtain the dental device.

27. The method for manufacturing a dental device as claimed in claim 26, further comprising:

obtaining a gum line of a three-dimensional tooth model, and converting the gum line into a cutting line; and
cutting an initial device based on the cutting line, and obtaining the dental device, wherein the initial device has an associated relationship with the formed tooth model.

28. The method for manufacturing a dental device as claimed in claim 27, further comprising:

performing film pressing on the formed tooth model, and obtaining a shell-shaped film covering the formed tooth model; and
marking the shell-shaped film, and obtaining the initial device with a mark.

29. The method for manufacturing a dental device as claimed in claim 27, wherein the obtaining a gum line of a three-dimensional tooth model comprises:

obtaining a target tooth model, wherein the target tooth model comprises a plurality of polygon patches;
determining edge categories of edges of the plurality of polygon patches, wherein the edge categories comprise tooth edges and gum edges; and
determining a gum line of the target tooth model according to the edge categories of the edges.

30. The method for manufacturing a dental device as claimed in claim 29, wherein the determining edge categories of edges of the plurality of polygon patches comprises:

obtaining target features of the edges of the plurality of polygon patches, wherein the target features comprise geometric features; and
determining the edge categories of the edges according to the target features.

31. The method for manufacturing a dental device as claimed in claim 30, wherein the determining the edge categories of the edges according to the target features comprises:

raising a dimension of the target features of the edges in an initial dimension, and obtaining first features in a first dimension;
reducing a dimension of the first features, and obtaining second features in a target dimension; and
determining each edge as a tooth edge or a gum edge according to a magnitude of values of the second features.

32. The method for manufacturing a dental device as claimed in claim 29, wherein the determining a gum line of the target tooth model according to the edge categories of the edges comprises:

determining patch categories of the polygon patches according to the edge categories, wherein the patch categories comprise a tooth patch and a gum patch; and
extracting the gum line based on common edges of adjacent polygon patches of different patch categories.

33. An apparatus for cutting a three-dimensional tooth model, comprising:
a memory and a processor, wherein the memory stores a computer program, and the computer program executes the method as claimed in any one of claims 1-32 when run by the processor.

34. A computer-readable storage medium, storing a computer program, wherein the computer program executes the method as claimed in any one of claims 1-32 when run by a processor.

Fig. 1

Terminal 101

Database 105

Store or read

Server 103

Fig. 2

| A two-Dimensional projection image of a three-dimensional tooth model is obtained, the two-dimensional projection image is recognized to obtain a plurality of tooth regions, wherein the tooth regions correspond one to one to teeth | S202 |

| Original seed points corresponding to the plurality of tooth regions are determined in the three-dimensional tooth model | S204 |

| The original seed points are expanded within a preset range to obtain target seed points of teeth in the three-dimensional tooth model | S206 |

| The three-dimensional tooth model is cut based on the target seed points of the teeth to obtain cut teeth | S208 |

Fig. 3

Fig. 4

402

Fig. 5

Fig. 6

Fig. 7

Fig. 8

Fig. 9

Fig. 10

Fig. 11

Fig. 12

| A gum line of a three-dimensional tooth model and a tooth region of the three-dimensional tooth model are obtained | S222 |

| Peak points of the gum line are extracted and paired to obtain a peak point combination | S224 |

| A cutting path between teeth in the tooth region is determined based on the peak point combination | S226 |

| The tooth region is cut according to the cutting path to obtain a target cut tooth | S228 |

Fig. 13

Peak point

Valley point

Fig. 14

Fig. 15

```
┌─────────────────────────────────────────────┐
│            A model is imported                │
└─────────────────────────────────────────────┘
                      │
                      ▼
┌─────────────────────────────────────────────┐
│       The model is aligned automatically      │
└─────────────────────────────────────────────┘
                      │
                      ▼
┌─────────────────────────────────────────────┐
│    A gum line is extracted based on feature   │
│                 recognition                   │
└─────────────────────────────────────────────┘
                      │
                      ▼
┌─────────────────────────────────────────────┐
│   A gum and teeth are cut based on the gum line│
└─────────────────────────────────────────────┘
                      │
                      ▼
┌─────────────────────────────────────────────┐
│  Peak points are obtained based on the gum line,│
│        and the peak points are paired         │
└─────────────────────────────────────────────┘
                      │
                      ▼
┌─────────────────────────────────────────────┐
│      A cutting curve of teeth by point pairing is│
│  obtained according to a curvature threshold and a│
│                 minimum path                  │
└─────────────────────────────────────────────┘
                      │
                      ▼
┌─────────────────────────────────────────────┐
│              The teeth are cut                │
└─────────────────────────────────────────────┘
```

Fig. 16

Fig. 17

Fig. 18

## INTERNATIONAL SEARCH REPORT

| | |
|---|---|
| International application No. | |
| | **PCT/CN2023/135600** |

**A. CLASSIFICATION OF SUBJECT MATTER**

G06T19/20(2011.01)i; G06T7/11(2017.01)i; A61C7/00(2006.01)i

According to International Patent Classification (IPC) or to both national classification and IPC

**B. FIELDS SEARCHED**

Minimum documentation searched (classification system followed by classification symbols)

IPC:G06T; A61C

Documentation searched other than minimum documentation to the extent that such documents are included in the fields searched

Electronic data base consulted during the international search (name of data base and, where practicable, search terms used)

CNTXT, ENTXTC, DWPI, VEN: 牙齿, 牙颌, 种子, 种子点, 面片, 分割, 扩充, 扩展, 边界, 边缘, 三维, 识别, 投影, "3d", 曲率, 流网络, 器械, 打印, teeth, tooth, jaw, segment+, extent+, expand+, seed point, three-dimensional, divid+, triangular grid, boundary, project+, identif+

**C. DOCUMENTS CONSIDERED TO BE RELEVANT**

| Category* | Citation of document, with indication, where appropriate, of the relevant passages | Relevant to claim No. |
|---|---|---|
| PX | CN 116168185 A (GUANGZHOU HIM3D INFORMATION TECHNOLOGY CO., LTD.) 26 May 2023 (2023-05-26)<br>description, paragraphs 0031-0286, and figures 1-15 | 1, 5-34 |
| Y | CN 108986111 A (NATIONAL INSTITUTE CORPORATION OF ADDITIVE MANUFACTURING, XI'AN) 11 December 2018 (2018-12-11)<br>description, paragraphs 0049-0062, and figures 1-11 | 1, 5-10, 15-34 |
| Y | CN 109903396 A (LUOYANG INSTITUTE OF INFORMATION TECHNOLOGY INDUSTRIES (LUOYANG BRANCH INSTITUTE OF ICT)) 18 June 2019 (2019-06-18)<br>description, paragraphs 0035-0067, and figures 1-7 | 1, 5-10, 15-34 |
| Y | CN 113876444 A (GUANGZHOU HIM3D INFORMATION TECHNOLOGY CO., LTD.) 04 January 2022 (2022-01-04)<br>description, paragraphs 0068-0177, and figures 1-6 | 26-34 |
| A | CN 114897924 A (YAKE WISDOM (BEIJING) TECHNOLOGY CO., LTD.) 12 August 2022 (2022-08-12)<br>entire document | 1-34 |

☑ Further documents are listed in the continuation of Box C.   ☑ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **30 January 2024** | **08 February 2024** |

| Name and mailing address of the ISA/CN | Authorized officer |
|---|---|
| **China National Intellectual Property Administration (ISA/CN)**<br>**China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**

| International application No. |
| --- |
| **PCT/CN2023/135600** |

| C. | DOCUMENTS CONSIDERED TO BE RELEVANT | | |
| --- | --- | --- | --- |
| Category* | Citation of document, with indication, where appropriate, of the relevant passages | | Relevant to claim No. |
| A | US 2021200188 A1 (ORMCO CORP.) 01 July 2021 (2021-07-01)<br>entire document | | 1-34 |
| A | WO 2022092627 A1 (MEDIT CORP.) 05 May 2022 (2022-05-05)<br>entire document | | 1-34 |

Form PCT/ISA/210 (second sheet) (July 2022)

**INTERNATIONAL SEARCH REPORT**
Information on patent family members

International application No.

**PCT/CN2023/135600**

| Patent document cited in search report | | | Publication date (day/month/year) | Patent family member(s) | | | Publication date (day/month/year) |
|---|---|---|---|---|---|---|---|
| CN | 116168185 | A | 26 May 2023 | None | | | |
| CN | 108986111 | A | 11 December 2018 | None | | | |
| CN | 109903396 | A | 18 June 2019 | None | | | |
| CN | 113876444 | A | 04 January 2022 | None | | | |
| CN | 114897924 | A | 12 August 2022 | None | | | |
| US | 2021200188 | A1 | 01 July 2021 | WO | 2022197524 | A1 | 22 September 2022 |
| WO | 2022092627 | A1 | 05 May 2022 | US | 2023390032 | A1 | 07 December 2023 |
| | | | | EP | 4238534 | A1 | 06 September 2023 |

Form PCT/ISA/210 (patent family annex) (July 2022)

**REFERENCES CITED IN THE DESCRIPTION**

**Patent documents cited in the description**

- CN 202211543154